# EUROPÄISCHE PATENTSCHRIFT

(11) **EP 1 837 500 B1**
(45) Veröffentlichungstag und Bekanntmachung des Hinweises auf die Patenterteilung: **13.10.2010**
(21) Anmeldenummer: 06111623.2
(22) Anmeldetag: 23.03.2006
(51) Int. Cl.: F01N 3/08, F01N 3/20

(54) **Verfahren zur Steuerung einer Abgasnachbehandlung und zur Vorherbestimmung einer zukünftigen Temperatur in einem Partikelfilter einer Brennkraftmaschine**
Method for controlling exhaust after treatment and for estimating a future temperature of a particulate filter of an internal combustion engine
Procédé de commande d'un traitement postérieur de gaz d'échappement et d'un calcul d'une température dans un filtre à particules d'un moteur à combustion interne

(43) Veröffentlichungstag der Anmeldung: 26.09.2007
(73) Patentinhaber: Ford Global Technologies, LLC, Dearborn, MI 48126 (US)
(72) Erfinder: Schneider, Matthew, 52064, Aachen (DE); Harmsen, Jan, 6369 BX, Simpelveld (NL); Balenovic, Mario, 5645 KT, Eindhoven (AN); Carberry, Brendan, 52074, Aachen (DE); Dubkov, Alexei, 52064, Aachen (DE); Yacoub, Yasser Mohammed Sayed, 50858, Köln (DE)
(74) Vertreter: Drömer, Hans-Carsten

(56) Entgegenhaltungen:
- EP-A- 0 856 645
- EP-A- 1 101 908
- EP-A- 1 350 932
- EP-A- 1 479 900
- EP-A- 1 496 223
- US-A1- 2005 109 021

## Beschreibung

Die Erfindung betrifft ein Verfahren zur Steuerung einer Abgasnachbehandlung und zur Vorherbestimmung einer zukünftigen Temperatur T_{DPF} (t₁) in einem Partikelfilter einer Brennkraftmaschine, die mindestens einen Zylinder und mindestens eine Abgasleitung zum Abführen der Abgase aus diesem mindestens einen Zylinder aufweist und bei der ein kombiniertes Abgasnachbehandlungssystem zur Nachbehandlung des Abgases in der mindestens einen Abgasleitung vorgesehen ist, wobei das kombinierte Abgasnachbehandlungssystem
■ einen Speicherkatalysator (LNT) zum Speichern und Reduzieren der im Abgas befindlichen Stickoxide (NOₓ),
■ einen Partikelfilter zum Sammeln und Verbrennen der im Abgas befindlichen Rußpartikel, der zusammen mit dem Speicherkatalysator integral als bauliche Einheit ausgebildet ist, und
■ einen stromaufwärts des Speicherkatalysators und des Partikelfilters angeordneten Oxidationskatalysator, insbesondere zur Oxidation des im Abgas befindlichen Kohlenmonoxides (CO) und der unverbrannten Kohlenwasserstoffe (HC),
umfasst.

Nach dem Stand der Technik, beispielsweise US 2005/0109021 A, werden Brennkraftmaschinen zur Reduzierung der Schadstoffemissionen mit verschiedenen Abgasnachbehandlungssystemen ausgestattet. Zwar findet auch ohne zusätzliche Maßnahmen während der Expansion und des Ausschiebens der Zylinderfüllung bei einem ausreichenden hohen Temperaturniveau und dem Vorhandensein genügend großer Sauerstoffmengen eine Oxidation der unverbrannten Kohlenwasserstoffe (HC) und von Kohlenmonoxid (CO) statt. Diese Reaktionen kommen aber aufgrund der stromabwärts schnell abnehmenden Abgastemperatur und der infolgedessen rapide sinkenden Reaktionsgeschwindigkeit schnell zum Erliegen. Eventueller Sauerstoffmangel kann durch eine Sekundärlufteinblasung kompensiert werden. Jedoch müssen in der Regel besondere Reaktoren und/oder Filter im Abgastrakt vorgesehen werden, um die Schadstoffemissionen unter sämtlichen Betriebsbedingungen spürbar zu reduzieren.

Thermische Reaktoren versuchen, eine weitgehende Nachoxidation von HC und CO im Abgassystem zu erzielen, indem eine Wärmeisolation und ein ausreichend großes Volumen im Abgasrohr des Abgassystems vorgesehen wird. Die Wärmeisolation soll ein möglichst hohes Temperaturniveau durch Minimierung der Wärmeverluste sicherstellen, wohingegen ein großes Abgasrohrvolumen eine lange Verweildauer der Abgase gewährleistet. Sowohl die lange Verweildauer als auch das hohe Temperaturniveau unterstützen die angestrebte Nachoxidation. Nachteilig ist der schlechte Wirkungsgrad bei unterstöchiometrischer Verbrennung und die hohen Kosten. Für Dieselmotoren sind thermische Reaktoren aufgrund des grundsätzlich niedrigeren Temperaturniveaus nicht zielführend.

Aus den genannten Gründen kommen nach dem Stand der Technik bei Ottomotoren katalytische Reaktoren zum Einsatz, die unter Verwendung katalytischer Materialien, die die Geschwindigkeit bestimmter Reaktionen erhöhen, eine Oxidation von HC und CO auch bei niedrigen Temperaturen sicherstellen. Sollen zusätzlich Stickoxide reduziert werden, kann dies durch den Einsatz eines Dreiwegkatalysators erreicht werden, der dazu aber einen in engen Grenzen ablaufenden stöchiometrischen Betrieb (λ≈1) des Ottomotors erfordert.

Dabei werden die Stickoxide NOₓ mittels der vorhandenen nicht oxidierten Abgaskomponenten, nämlich den Kohlenmonoxiden und den unverbrannten Kohlenwasserstoffen, reduziert, wobei gleichzeitig diese Abgaskomponenten oxidiert werden.

Bei Brennkraftmaschinen, die mit einem Luftüberschuss betrieben werden, also beispielsweise im Magerbetrieb arbeitende Ottomotoren, insbesondere aber direkteinspritzende Dieselmotoren aber auch direkteinspritzende Ottomotoren, können die im Abgas befindlichen Stickoxide prinzipbedingt - d.h. aufgrund der fehlenden Reduktionsmittel - nicht reduziert werden.

Zur Oxidation der unverbrannten Kohlenwasserstoffe (HC) und von Kohlenmonoxid (CO) wird ein Oxidationskatalysator im Abgassystem vorgesehen. Zur Reduzierung der Stickoxide werden selektive Katalysatoren - sogenannte SCR-Katalysatoren - eingesetzt, bei denen gezielt Reduktionsmittel in das Abgas eingebracht werden, um die Stickoxide selektiv zu vermindern. Als Reduktionsmittel kommen neben Ammoniak und Harnstoff auch unverbrannte Kohlenwasserstoffe zum Einsatz. Letzteres wird auch als HC-Anreicherung bezeichnet, wobei die unverbrannten Kohlenwasserstoffe direkt in den Abgastrakt eingebracht werden oder aber durch innermotorische Maßnahmen, nämlich durch eine Nacheinspritzung von zusätzlichem Kraftstoff in den Brennraum nach der eigentlichen Verbrennung, zugeführt werden. Dabei soll der nacheingespritzte Kraftstoff nicht im Brennraum durch die noch ablaufende Hauptverbrennung oder aber durch die - auch nach Beendigung der Hauptverbrennung - hohen Verbrennungsgastemperaturen gezündet werden, sondern während des Ladungswechsels in den Abgastrakt eingeleitet werden.

Brennkraftmaschinen, die von einer Nacheinspritzung Gebrauch machen, sind aber von Hause aus sehr anfällig für eine Verdünnung bzw. Kontaminierung des Öls durch unverbrannte Kohlenwasserstoffe. In Abhängigkeit von der Quantität des nacheingespritzten Kraftstoffes und dem Einspritzzeitpunkt, gelangt ein mehr oder weniger großer Anteil des nacheingespritzten Kraftstoffes auf die Zylinderinnenwand und mischt sich dort mit dem anhaftenden Ölfilm. Anschließend gelangt der Kraftstoff zusammen mit dem Öl und dem Blow-by Gas in das Kurbelgehäuse und trägt so maßgeblich zur Ölverdünnung bei. Die Ölverdünnung nimmt mit steigender Kraftstoffmenge und Verschieben der Nacheinspritzung nach spät zu. Durch die Veränderung der Schmierstoffeigenschaften des Öls hat die Ölverdünnung maßgeblich Einfluss auf den Verschleiß und die Haltbarkeit d.h. die Lebensdauer der Brennkraftmaschine.

Grundsätzlich können die Stickoxidemissionen auch mit sogenannten Stickoxidspeicherkatalysatoren (LNT - Lean NOₓ Trap) reduziert werden. Dabei werden die Stickoxide zunächst - während eines mageren Betriebs der Brennkraftmaschine - im Katalysator absorbiert d.h. gesammelt und gespeichert, um dann während einer Regenerationsphase beispielsweise mittels eines unterstöchiometrischen Betriebs (beispielsweise λ < 0,95) der Brennkraftmaschine bei Sauerstoffmangel reduziert zu werden. Weitere innermotorische Möglichkeiten zur Realisierung eines fetten d.h. eines unterstöchiometrischen Betriebs der Brennkraftmaschine bietet die Abgasrückführung (AGR) und - bei Dieselmotoren - die Drosselung im Ansaugtrakt. Auf innermotorische Maßnahmen kann verzichtet werden, wenn das Reduktionsmittel direkt in den Abgastrakt eingebracht wird, beispielsweise durch Einspritzen von zusätzlichem Kraftstoff. Während der Regenerationsphase werden die Stickoxide freigegeben und im wesentlichen in Stickstoffdioxid (N₂), Kohlenstoffdioxid (CO₂) und Wasser (H₂O) umgewandelt. Die Häufigkeit der Regenerationsphasen wird durch die Gesamtemission an Stickoxiden und die Speicherkapazität des LNT bestimmt.

Eine Schwierigkeit bei der Verwendung und insbesondere bei der Anordnung des LNT im Abgastrakt ergibt sich aus dem im Abgas enthaltenen Schwefel, der ebenfalls im LNT absorbiert wird und im Rahmen einer sogenannten Desulfurisation (deSOₓ) d.h. einer Entschwefelung regelmäßig entfernt werden muss. Hierfür muss der LNT auf hohe Temperaturen, üblicherweise zwischen 600°C und 700°C, erwärmt und mit einem Reduktionsmittel versorgt werden, was wiederum durch den Übergang zu einem fetten Betrieb der Brennkraftmaschine erreicht werden kann. Die Entschwefelung des LNT kann zur thermischen Alterung des Katalysators beitragen und die gewollte Konvertierung der Stickoxide gegen Ende seiner Lebensdauer nachteilig beeinflussen.

Zur Minimierung der Emission von Rußpartikeln werden nach dem Stand der Technik sogenannte regenerative Partikelfilter eingesetzt, die die Rußpartikel aus dem Abgas herausfiltern und speichern, wobei diese Rußpartikel im Rahmen der Regeneration des Filters intermittierend verbrannt werden. Die Intervalle der Regeneration werden dabei unter anderem durch den Abgasgegendruck, der sich infolge des zunehmenden Strömungswiderstandes des Filters aufgrund der anwachsenden Partikelmasse im Filter einstellt, bestimmt.

Die zur Regeneration des Partikelfilters hohen Temperaturen - etwa 550°C bei nicht vorhandener katalytischer Unterstützung - werden im Betrieb nur bei hohen Lasten und hohen Drehzahlen erreicht. Daher muss auf zusätzliche Maßnahmen zurückgegriffen werden, um eine Regeneration des Filters unter allen Betriebsbedingungen zu gewährleisten.

Die Verbrennung der Partikel kann dabei durch im Abgastrakt vorgesehene Zusatzbrenner erfolgen oder aber durch eine Nacheinspritzung von zusätzlichem Kraftstoff in den Brennraum, wobei der nacheingespritzte Kraftstoff bereits im Brennraum gezündet wird, was durch die auslaufende Hauptverbrennung oder die gegen Ende der Verbrennung im Brennraum vorliegenden hohen Temperaturen geschehen kann, so dass die Abgastemperatur der in den Abgastrakt ausgeschobenen Abgase innermotorisch angehoben wird. Nachteilig an dieser Vorgehensweise sind insbesondere die im Abgastrakt auf dem Weg zum Filter zu befürchtenden Wärmeverluste und die damit verbundene Temperaturabsenkung der heißen Abgase. Der Filter kann ohne weiteres einen Meter und mehr vom Auslass des Brennraums entfernt im Abgastrakt angeordnet sein.

Der Kompensation der Wärmeverluste durch die Generierung entsprechend hoher Abgastemperaturen sind durch die Temperaturfestigkeit anderer im Abgasstrang vorgesehener Bauteile Grenzen gesetzt, insbesondere der Temperaturbeständigkeit einer im Abgassystem angeordneten Turbine eines Abgasturboladers, eines Dreiwegekatalysators oder eines Speicherkatalysators. Üblicherweise wird die Turbine mit den höchsten Temperaturen beaufschlagt, da sie am nächsten am Auslaß des Brennraums angeordnet ist.

Der nacheingespritzte Kraftstoff kann auch unverbrannt und gegebenenfalls schon aufbereitet in den Abgastrakt ausgeschoben werden und dann gezielt lokal dort im Abgassystem oxidiert werden, wo hohe Abgastemperaturen notwendig sind, nämlich im Partikelfilter bzw. in seiner unmittelbaren Nachbarschaft. Die Verbrennung des nacheingespritzten Kraftstoffes kann katalytisch mittels eines vor dem Filter positionierten Katalysators initiiert werden. Es kann aber auch eine elektrische Zündung in bzw. an dem Rußfilter vorgesehen werden.

Ähnlich wie bereits für die Reduzierung der Stickoxide vorgeschlagen, kann auch Kraftstoff direkt in den Abgastrakt eingebracht werden. Die weitere Vorgehensweise entspricht der zuvor Beschriebenen, bei der der zusätzlich eingespritzte Kraftstoff unverbrannt in das Abgassystem gelangt und gezielt in der Nachbarschaft des Partikelfilters oxidiert wird.

Zudem muss berücksichtigt werden, dass der Einsatz von zusätzlichem Kraftstoff, sei es aufgrund eines Überganges zu einem fetten Motorbetrieb oder aber infolge der Anreicherung des Abgases mit Kraftstoff, prinzipbedingt den Kraftstoffverbrauch der Brennkraftmaschine nachteilig beeinflusst. Insbesondere die Häufigkeit, mit der der Partikelfilter regeneriert oder der LNT gereinigt wird, hat maßgeblichen und direkten Einfluss auf die zu diesen Zwecken eingesetzte Kraftstoffmenge und damit auf den Gesamtverbrauch.

Da sowohl die Abgase von Ottomotoren als auch die Abgase von Dieselmotoren - wenn auch in unterschiedlichen Mengen und Qualitäten - unverbrannte Kohlenwasserstoffe (HC), Kohlenmonoxid (CO), Stickoxide (NOₓ) als auch Rußpartikel enthalten, kommen nach dem Stand der Technik in der Regel kombinierte Abgasnachbehandlungssysteme zum Einsatz, die einen oder mehrere der oben beschriebenen Katalysatoren, Reaktoren und/oder Filter umfassen.

Untersuchungen haben gezeigt, dass innermotorische Maßnahmen zur Realisierung eines fetteren Betriebs der Brennkraftmaschine - ob zur Erhöhung der Abgastemperatur mit dem Ziel einer Filterregeneration oder aber für eine Anfettung zur Regeneration des LNT - grundsätzlich zu erhöhten Methan-Emissionen (CH₄) führen, wobei bei Dieselmotoren nahezu das gesamte Methan die Abgasleitung und die vorgesehenen Abgasnachbehandlungssysteme durchläuft und in die Umgebung austritt, ohne oxidiert zu werden. Die im Abgastrakt bzw. Oxidationskatalysator im normalen Betrieb der Brennkraftmaschine vorliegenden Temperaturen sind nicht hoch genug, um das im Abgas enthaltene Methan zu konvertieren bzw. zu oxidieren.

Folglich nehmen die HC-Emissionen, welche die Methan-Emissionen mit einschließen, spürbar zu, wenn ein im Abgastrakt vorgesehener Speicherkatalysator gereinigt oder ein Partikelfilter regeneriert werden soll und aus diesem Anlass die Brennkraftmaschine mittels innermotorischer Maßnahmen in den fetten Betrieb überführt wird. Das Methan kann dabei bis zu 90% der unverbrannten Kohlenwasserstoffe ausmachen, die während des fetten Betriebes von der Brennkraftmaschine emittiert und in den Abgastrakt eingeleitet werden.

Andererseits erhöhen sich die NOₓ- und Partikelemissionen, wenn mit Blick auf die HC-Emissionen weniger häufig in den fetten Betrieb der Brennkraftmaschine gewechselt wird und dadurch ein im Abgastrakt vorgesehener Speicherkatalysator und/oder Partikelfilter nicht mit der notwendigen Häufigkeit gereinigt bzw. regeneriert wird. Ist die Speicherkapazität des LNT erschöpft, gelangen die Stickoxide ungehindert in die Umgebung. Ein zu hoch beladener Partikelfilter führt zu einem unvorteilhaft hohen Abgasgegendruck, wodurch auch die Qualität der Verbrennung, insbesondere durch einen verschlechterten Ladungswechsel, leidet.

Zusammenfassend kann festgehalten werden, dass die beabsichtigte gleichzeitige Reduzierung der maßgeblichen Schadstoffe, nämlich HC und CO einerseits und NOₓ und Partikel andererseits, in einen Konflikt mündet; wie zuvor dargestellt. Darüber hinaus ergeben sich weitere Konflikte bei der Anordnung der einzelnen Abgasnachbehandlungssysteme - des Oxidationskatalysators, des LNT und des Partikelfilters - im Abgastrakt. Das gleichzeitige Betreiben und Steuern der genannten Abgasnachbehandlungssysteme führt zu weiteren Schwierigkeiten, insbesondere bei der Abstimmung der Systeme aufeinander, da die unterschiedlichen Abgasnachbehandlungssysteme verschiedene und teilweise entgegenstehende Randbedingungen erfordern. Insbesondere die Anforderungen an das bevorzugte Temperaturniveau und das Luftverhältnis λ divergieren stark.

Die vorliegende Erfindung betrifft nun ein kombiniertes Abgasnachbehandlungssystem mit einem Speicherkatalysator (LNT), einem Partikelfilter und einem Oxidationskatalysator als Abgasnachbehandlungskomponenten.

Die einzelnen Komponenten des kombinierten Abgasnachbehandlungssystems sind in Reihe geschaltet, wobei der Oxidationskatalysator stromaufwärts des Speicherkatalysators bzw. des Partikelfilters angeordnet ist. Der Speicherkatalysator und der Partikelfilter sind integral als bauliche Einheit ausgebildet. Dies bedeutet im Sinne der vorliegenden Anmeldung beispielsweise, dass sowohl für den Speicherkatalysator als auch für den Partikelfilter ein eigenes Trägersubstrat vorgesehen werden kann, wobei die beiden Trägersubstrate benachbart zueinander angeordnet werden und auf diese Weise eine bauliche Einheit bilden oder aber von Hause aus als zusammenhängendes Trägersubstrat ausgebildet werden. Alternativ kann als Partikelfilter ein Wabenfilter dienen, der gleichzeitig als Trägersubstrat zur Ausbildung eines Speicherkatalysators verwendet wird.

Dadurch, dass der Oxidationskatalysator stromaufwärts der beiden anderen Komponenten vorgesehen wird, ist der Oxidationskatalysator die Abgasnachbehandlungskomponente, die am nächsten am Auslass der Brennkraftmaschine angeordnet ist und zuerst von den heißen Abgasen durchströmt wird. Folglich sind die Wärmeverluste und die damit verbundene Temperaturabsenkung der heißen Abgase vergleichsweise gering. Dementsprechend erreicht der Oxidationskatalysator seine sogenannte Anspringtemperatur, die beispielsweise zwischen 120°C bis 250°C betragen kann, auch nach einem Kaltstart innerhalb einer verhältnismäßig kurzen Zeitspanne. Sowohl die für Dieselmotoren verwendeten Oxidationskatalysatoren als auch die bei Ottomotoren eingesetzten Drei-Wege-Katalysatoren benötigen eine bestimmte Betriebstemperatur, um die Schadstoffe in ausreichendem Maße zu konvertieren und die Schadstoffemissionen spürbar zu reduzieren. Die Drei-Wege-Katalysatoren sollen im Rahmen der vorliegenden Erfindung zu den Oxidationskatalysatoren gezählt werden.

Sollen große Mengen an Methan oxidiert werden, die sich auch aufgrund des Einsatzes innermotorischer Maßnahmen ergeben können, ist eine wesentlich höhere Temperatur von etwa 500°C - 550°C erforderlich und zielführend.

Die im Oxidationskatalysator ablaufenden exothermen Reaktionen bewirken eine Erwärmung des hindurchströmenden Abgases und damit eine Erwärmung der nachgeschalteten d.h. stromabwärts des Katalysators angeordneten Abgasnachbehandlungssysteme, was für die diesen Komponenten zugewiesenen Aufgaben vorteilhaft ist.

Die Temperatur des Speicherkatalysators (LNT) sollte vorzugsweise in einem Temperaturfenster zwischen 200°C und 450°C liegen, so dass einerseits eine schnelle Reduktion sichergestellt wird und andererseits keine Desorption ohne Konvertierung der wieder freigegebenen Stickoxide stattfindet, was durch zu hohe Temperaturen ausgelöst werden kann. Auch die im Speicherkatalysator ablaufenden Reaktionen sind mit einer Wärmeabgabe verbunden und führen auf diese Weise zu einer Erhöhung der Abgastemperatur und der stromabwärts liegenden Komponenten, aber auch zu einer Erwärmung des Speicherkatalysators selbst.

Der Partikelfilter erreicht seine Regenerationstemperatur von 550°C üblicherweise nicht während des normalen mageren Motorenbetriebs. Jedoch findet auch bei niedrigeren Temperaturen eine passive Regeneration des Filters statt, bei der im Abgas befindliche Stickoxide (NOₓ) den Sauerstoff für die Oxidation d. h. die Verbrennung der im Filter gespeicherten Rußpartikel liefern und dabei gleichzeitig selbst zu Stickstoffdioxid (N₂) konvertiert werden.

Vorteilhaft wäre es, die stromaufwärts des Partikelfilters gelegenen Abgasnachbehandlungskomponenten in der Art zu betreiben bzw. zu steuern, dass der Partikelfilter ohne weiteres Zutun d. h. allein aufgrund des Betriebes des stromaufwärts vorgesehenen Oxidationskatalysators und des Speicherkatalysators seine Regenerationstemperatur erreicht. Ein derartiger Synergieeffekt würde den Betrieb des in Rede stehenden kombinierten Abgasnachbehandlungssystems sehr vereinfachen und zudem helfen, Kraftstoff einzusparen. Gezielte Filterregenerationen wären nicht mehr oder wesentlich seltener erforderlich als nach dem Stand der Technik üblich.

Vor diesem Hintergrund ist es die Aufgabe der vorliegenden Erfindung, ein Verfahren gemäß dem Oberbegriff des Anspruchs 1 aufzuzeigen, mit dem ein kombiniertes Abgasnachbehandlungssystem der in Rede stehenden Art möglichst vorteilhaft, insbesondere unter Ausnutzung möglicher Synergieeffekte, betrieben werden kann.

Gelöst wird diese Aufgabe durch ein Verfahren zur Steuerung einer Abgasnachbehandlung und zur Vorherbestimmung einer zukünftigen Temperatur T_{DPF} (t₁) in einem Partikelfilter einer Brennkraftmaschine, die mindestens einen Zylinder und mindestens eine Abgasleitung zum Abführen der Abgase aus diesem mindestens einen Zylinder aufweist und bei der ein kombiniertes Abgasnachbehandlungssystem zur Nachbehandlung des Abgases in der mindestens einen Abgasleitung vorgesehen ist, wobei das kombinierte Abgasnachbehandlungssystem
■ einen Speicherkatalysator (LNT) zum Speichern und Reduzieren der im Abgas befindlichen Stickoxide (NOₓ),
■ einen Partikelfilter zum Sammeln und Verbrennen der im Abgas befindlichen Rußpartikel, der zusammen mit dem Speicherkatalysator integral als bauliche Einheit ausgebildet ist, und
■ einen stromaufwärts des Speicherkatalysators und des Partikelfilters angeordneten Oxidationskatalysator, insbesondere zur Oxidation des im Abgas befindlichen Kohlenmonoxides (CO) und der unverbrannten Kohlenwasserstoffe (HC),
umfasst, und das dadurch gekennzeichnet ist, dass
■ der Oxidationskatalysator des kombinierten Abgasnachbehandlungssystems auf eine vorgebbare Temperatur T_{threshold,cat} erwärmt wird, falls die momentane Temperatur T_{catalyst} des Oxidationskatalysators kleiner ist als die vorgegebene Temperatur T_{threshold,cat} d.h. T_{catalyst} < T_{threshold,cat}, und
■ der Speicherkatalysator auf eine vorgebbare Temperatur T_{threshold,LNT} erwärmt wird, falls die momentane Temperatur T_{LNT} des Speicherkatalysators kleiner ist als die vorgegebene Temperatur T_{threshold,LNT} d.h. T_{LNT} < T_{threshold,LNT}, und anschließend
■ eine rechnerische Simulation durchgeführt wird, die - ausgehend davon, dass das Abgas für eine vorgebbare Zeitspanne Δtᵢ mit Reduktionsmitteln zum Reduzieren der Stickoxide angereichert wird - die Temperatur T_{DPF} (t₁) zu einem vorgebbaren Zeitpunkt t₁ im Partikelfilter vorherbestimmt.

Zusammen führen die drei Abgasnachbehandlungskomponenten zu einer Reduzierung der maßgeblichen Schadstoffe, nämlich HC, CO, NOₓ und Partikel, weshalb ein derartiges System auch als Vier-Wege-Katalysator bezeichnet werden kann. Es kann vorteilhaft sein, den Oxidationskatalysator einerseits und die Kombination aus Speicherkatalysator und Partikelfilter andererseits in einem gewissen Abstand zueinander anzuordnen. Wenn dem Oxidationskatalysator die Aufgabe zukommt, Methan zu oxidieren, und er zu diesem Zweck auf bis zu 550°C erwärmt wird, könnte sich der stromabwärts liegende Speicherkatalysator (LNT) so stark erwärmen, dass seine Temperatur nicht mehr in dem bevorzugten Temperaturfenster zwischen 200°C und 450°C liegt. Eine vorzeitige thermische Alterung sowie die ungewollte Desorption der zuvor gespeicherten Stickoxide wären die Folge.

Das erfindungsgemäße Verfahren basiert auf einer gezielten Erwärmung der Abgasnachbehandlungskomponenten und einer Anreicherung des Abgases mit Reduktionsmitteln.

Wird die Anreicherung des Abgases mit Reduktionsmittel durch Einspritzung von Kraftstoff in die Abgasleitung realisiert, ist es ausreichend für den Oxidationskatalysator eine Schwellentemperatur T_{threshold,cat,1} ≈ 200°C - 250°C vorzugeben. Diese Temperatur des Oxidationskatalysators sorgt zusammen mit den im Oxidationskatalysator ablaufenden exothermen Reaktionen dafür, dass der stromabwärts gelegene Speicherkatalysator in seinem für die Reinigung bevorzugten Temperaturfenster von 200°C bis 450°C arbeitet.

Wird die Anreicherung des Abgases mit Reduktionsmittel hingegen mittels innermotorischer Maßnahmen realisiert, wird es erforderlich, große Mengen an Methan zu oxidieren, weshalb die Vorgabe einer höheren Temperatur erforderlich und zielführend ist, beispielsweise T_{threshold,cat,2} ≈ 500°C - 550°C. Die Erwärmung des Oxidationskatalysators auf derart hohe Temperaturen kann zu einer zeitlich verzögerten Regeneration des stromabwärts gelegenen Partikelfilters genutzt werden, wie weiter unten noch erörtert werden wird. Die im Oxidationskatalysator ablaufenden exothermen Vorgänge, insbesondere während des fetten Betriebes der Brennkraftmaschine, führen zu einer zusätzlichen Erwärmung des Abgases, was bei der Festlegung der Temperatur T_{threshold,cat} in der Weise berücksichtigt werden kann, dass diese Temperatur niedriger angesetzt wird, beispielsweise T_{threshold,cat} ≈ 400°C.

Die Anhebung der Temperatur des Oxidationskatalysators d. h. die Vorgabe einer Temperatur, die höher ist als 250°C, kann ebenfalls hilfreich sein, falls eine Entschwefelung (deSOx) des Speicherkatalysators beabsichtigt ist. Dies erfordert üblicherweise Temperaturen des LNT's von 600°C bis 700 °C bevor der LNT mit einem Reduktionsmittel zur Reduktion der Schwefeloxide (SOₓ) versorgt wird. Zur Erzielung dieser Temperaturen kann der Oxidationskatalysator bzw. die Erwärmung des Oxidationskatalysators genutzt werden, zumindest unterstützend.

Die gezielt eingeleitete Entschwefelung (deSOₓ) des Speicherkatalysators kann gleichzeitig für eine tiefe Regeneration des Partikelfilters genutzt werden. Eine derartige tiefe Filterregenration ist bei Einsatz des erfindungsgemäßen Verfahrens weniger häufig notwendig und durchzuführen als nach dem Stand der Technik üblich, da der Filter bereits bei jeder Reinigung des LNT zumindest teilweise regeneriert wird. Der Gesamtkraftstoffverbrauch kann auch hierdurch mit dem erfindungsgemäßen Verfahren spürbar reduziert werden.

Die Erwärmung des Oxidationskatalysators und die im Oxidationskatalysator ablaufenden exothermen Reaktionen sorgen für eine Anhebung der Abgastemperatur und eine Erwärmung der stromabwärts vorgesehenen Abgasnachbehandlungskomponenten d.h. auch für eine Erwärmung des Speicherkatalysators. Die Erwärmung des Speicherkatalysators auf eine vorgegebene Temperatur T_{threshold,LNT} kann bei der Durchführung des erfindungsgemäßen Verfahrens sowohl direkt als auch indirekt - d. h. über eine Erwärmung des Oxidationskatalysators oder des Abgases - erfolgen.

Die Temperatur des Speicherkatalysators (LNT) sollte - wie oben bereits erwähnt - zwischen 200°C und 450°C liegen, was eine Reduktion sicherstellt und eine ungewollte Desorption der Stickoxide verhindert.

Wurde der Abgasstrom zum Zweck der Reinigung des Speicherkatalysators d.h. der Freigabe und der Reduktion der gespeicherten Stickoxide mit Reduktionsmitteln angereichert und die Brennkraftmaschine anschließend wieder in den mageren Betrieb überführt bzw. die Einspritzung von Kraftstoff oder dergleichen direkt in die Abgasleitung unterbunden d.h. eingestellt, weist der Abgasstrom wieder den für die Filterregeneration notwendigen Sauerstoffüberschuss auf, wobei der Sauerstoff teilweise im Oxidationskatalysator bzw. Speicherkatalysator absorbiert wird.

Untersuchungen haben gezeigt, dass 20 bis 200 Sekunden nach Beendigung des Reinigungsvorganges des LNT der Partikelfilter seine maximale Temperatur aufweist bzw. erreicht. Die Erwärmung des Oxidationskatalysators, die Wärmeabgabe infolge exothermer Reaktionen und die verzögerte Ausbreitung einer Temperaturwelle in der Abgasleitung erklären die zeitlich verzögerte Erwärmung des Partikelfilters.

In der Zusammenschau kann festgestellt werden, dass kurz nach der Reinigung des LNT die Bedingungen für eine Filterregeneration günstig sind, nämlich sowohl die erforderlich hohen Temperaturen und der notwendige Sauerstoff für die Verbrennung des gesammelten Rußes vorliegen. Zudem wird der LNT vor Eintreffen der Temperaturwelle gereinigt, so dass auch keine Desorption infolge zu hoher Temperaturen zu befürchten ist.

Es ergeben sich demnach in vorteilhafter Weise Synergieeffekte, wobei es sich anbietet, im Anschluß an die Reinigung des Speicherkatalysators (deNOₓ) eine Filterregeneration (deSoot) vorzunehmen, so dass eine gezielte isolierte Filterregeneration weniger häufig durchzuführen ist als nach dem Stand der Technik üblich. Dies führt dazu, dass der Kraftstoffmehrverbrauch infolge Reinigung bzw. Regeneration der jeweiligen Abgasnachbehandlungssysteme im Vergleich zu aus dem Stand der Technik bekannten Verfahren niedriger ausfällt. Der Gesamtkraftstoffverbrauch kann folglich mit dem erfindungsgemäßen Verfahren reduziert werden.

Da der Partikelfilter seine maximale Temperatur erst zeitverzögert erreicht, wird die Anreicherung des Abgases mit Reduktionsmitteln erfindungsgemäß zunächst simuliert, um die Filtertemperatur zu einem vorgegebenen Zeitpunkt t₁ abschätzen zu können. Auf der Grundlage dieser rechnerischen Simulation der Abgasanreicherung bzw. der auf diese Weise ermittelten Filtertemperatur T_{DPF} (t₁) wird dann entschieden, ob tatsächlich eine Abgasanreicherung vorgenommen wird.

Für die Simulation können aus dem Stand der Technik bekannte Modelle verwendet werden. Eingangssignale für die verwendeten Modelle können beispielsweise die Einlasstemperatur, der Abgasmassenstrom und/oder ganz allgemein die Betriebsbedingungen bzw. Betriebsparameter der Brennkraftmaschine sein. Es können auch andere Temperaturen als Eingangssignale dienen, beispielsweise die Abgastemperatur stromaufwärts oder stromabwärts einer in der Abgasleitung angeordneten Turbine oder die Abgastemperatur stromaufwärts oder stromabwärts des Partikelfilters bzw. des Oxidationskatalysators.

Dadurch wird die der Erfindung zugrunde liegende Aufgabe gelöst, nämlich ein Verfahren gemäß dem Oberbegriff des Anspruchs 1 aufzuzeigen, mit dem ein kombiniertes Abgasnachbehandlungssystem der in Rede stehenden Art möglichst vorteilhaft, insbesondere unter Ausnutzung möglicher Synergieeffekte, betrieben werden kann.

Weitere vorteilhafte Ausführungsformen gemäß den Unteransprüchen werden im folgenden erläutert.

Vorteilhaft sind Ausführungsformen des Verfahrens, bei denen zum Zweck der Filterregeneration das Abgas tatsächlich für die vorgegebene Zeitspanne Δtᵢ mit Reduktionsmitteln angereichert wird, falls die vorherbestimmte Temperatur T_{DPF} (t₁) im Partikelfilter größer ist als eine vorgebbare Grenztemperatur T_{Grenz} d. h. falls gilt: T_{DPF} (t₁) > T_{Grenz}.

Als Grenztemperatur T_{Grenz} kann beispielsweise die Filterregenerationstemperatur angesetzt werden, welche bei nicht vorhandener katalytischer Unterstützung etwa 550°C beträgt. Die Grenztemperatur kann, falls der Partikelfilter eine katalytische Beschichtung aufweist, welche die Zündtemperatur für Ruß herabsetzt, oder dem Kraftstoff mit demselben Ziel Additive zugesetzt wurden, auch niedriger angesetzt werden.

Die rechnerisch, mittels Simulation ermittelte Filtertemperatur T_{DPF} (t₁) wird mit der Grenztemperatur verglichen. Das Ergebnis dieses Vergleichs dient als Entscheidungsgrundlage dafür, ob das Abgas tatsächlich angereichert wird. Auf diese Weise wird Reinigung des LNT von der Filtertemperatur abhängig gemacht bzw. die Möglichkeit geschaffen, die Reinigung des LNT durch Abgasanreicherung tatsächlich nur dann durchzuführen, wenn gleichzeitig der Partikelfilter - aufgrund ausreichend hoher Temperaturen - regeneriert werden kann d. h. wenn sich vorteilhafte Synergien ergeben und genutzt werden können.

Vorteilhaft sind Ausführungsformen des Verfahrens, bei denen mittels einer rechnerischen Simulation die Menge an im Partikelfilter oxidierten Ruß Δm_{soot,rech} bzw. die verbleibende Beladung ϕ_{PDPF,rech} des Partikelfilters vorherbestimmt wird, für den Fall, dass das Abgas für die vorgegebene Zeitspanne Δtᵢ mit Reduktionsmitteln angereichert wird.

Bei den beiden genannten Größen - Δm_{soot,rech} und ϕ_{DPF,rech} - handelt es sich gewissermaßen um Betriebsparameter bzw. Zustandgrößen des Partikelfilters. Es ist vorteilhaft, die Beladung des Filters bzw. die Menge an während der Regeneration verbranntem Ruß zu kennen. Denn sollte beispielsweise die Beladung des Filters einen zulässigen Höchstwert überschreiten, kann es erforderlich werden, eine Filterregeneration durchzuführen, ohne dass die übrigen Abgasnachbehandlungskomponenten berücksichtigt werden oder die Nutzung möglicher Synergieeffekte von Interesse ist.

Vorteilhaft sind Ausführungsformen des Verfahrens, bei denen die vorherbestimmte Menge Δm_{soot,rech} an Ruß mit einer vorgebbaren Menge Δm_{soot,threshold} bzw. die vorherbestimmte Beladung ϕ_{DPF,rech} des Partikelfilters mit einer vorgebbaren Beladung ϕ_{DPF,threshold} des Partikelfilters verglichen wird und
■ die rechnerische Simulation mit einer vergrößerten Zeitspanne Δtᵢ₊₁ > Δtᵢ erneut durchgeführt wird, und/oder
■ der Oxidationskatalysator und/oder der Speicherkatalysator weiter erwärmt wird,
falls gilt: Δm_{soot,rech} < Δm_{soot,threshold} bzw. ϕ_{DPF,rech} > ϕ_{DPF}, threshold

Die Entscheidung, ob eine Anreicherung des Abgases durchgeführt wird, kann - neben der Berücksichtigung der Filtertemperatur T_{DPF} - auch von anderen Kriterien abhängig gemacht werden. So können Sollwerte ϕ_{DPF, threshold} für die Beladung des Filters oder Δm_{soot,threshold}, für die Menge an zu oxidierendem Ruß vorgegeben werden. Diese Sollwerte werden dann mit den rechnerisch ermittelten Werten der Simulation verglichen. Ergibt der Vergleich, dass zum jetzigen Zeitpunkt die Sollwerte nicht realisiert werden können, bestehen verschiedene Optionen.

Die Simulation wird mit einer größeren Zeitspanne Δtᵢ₊₁ für die Abgasanreicherung erneut durchgeführt und die rechnerisch ermittelten Werte wieder mit den Sollwerten verglichen. Wird die Abgasanreicherung dadurch realisiert, dass die Brennkraftmaschine unterstöchiometrisch betrieben wird, wird gleichzeitig die Abgastemperatur angehoben, was zu veränderten Simulationsergebnissen fähren kann. D.h. durch Vergrößerung der Zeitspanne Δtᵢ₊₁ kann es sich ergeben, dass die vorgegebenen Sollwerte erreicht werden.

Alternativ kann der Oxidationskatalysator und/oder der Speicherkatalysator weiter erwärmt werden, was ebenfalls die Abgastemperatur anhebt.

Werden die vorgegeben Sollwerte eingehalten, kann die Abgasanreicherung tatsächlich erfolgen, um die zuvor rechnerisch mittels Simulation ermittelten Werte zu realisieren.

Vorteilhaft sind daher Ausführungsformen des Verfahrens, bei denen die vorherbestimmte Menge Δm_{soot,rech} an Ruß mit einer vorgebbaren Menge Δm_{soot,threshold} bzw. die vorherbestimmte Beladung ϕ_{DPF,rech} des Partikelfilters mit einer vorgebbaren Beladung ϕ_{DPF,threshold} des Partikelfilters verglichen wird und das Abgas tatsächlich für die vorgegebene Zeitspanne Δtᵢ mit Reduktionsmitteln angereichert wird, falls gilt: Δm_{soot,rech} > Δm_{soot,threshold} bzw. ϕ_{DPF,rech} < ϕ_{DPF,threshold}.

Vorteilhaft sind auch Ausführungsformen des Verfahrens, bei denen die Menge Δm_{NOx,rech} an Stickoxiden (NOₓ), die während der Zeitspanne Δtᵢ im Speicherkatalysator konvertiert wird, bzw. der Sättigungsgrad ϕ_{LNT,rech} des Speicherkatalysators nach Verstreichen der Zeitspanne Δtᵢ vorherbestimmt wird.

Analog zur Filterregeneration bzw. zur momentanen Beladung des Partikelfilters ist es im Hinblick auf den LNT ebenfalls von Interesse den Sättigungsgrad des Speicherkatalysators d.h. die schon ausgenutzte bzw. noch verfügbare Speicherkapazität zu kennen. Einen nur gering gesättigten LNT, beispielsweise mit einem Sättigungsgrad von 0,2 d.h. 20%, durch Anreicherung des Abgases zu reinigen, ist im Vergleich zu einem stärker gesättigten LNT vergleichsweise aufwendig, weshalb eine Reinigung des Speicherkatalysators, auch wenn sie grundsätzlich möglich wäre, nachteilig sein kann, beispielsweise wenn der erzielte Effekt - die zumindest teilweise Reinigung des LNT - nur mittels eines unverhältnismäßig hohen Kraftstoffaufwandes realisiert werden kann.

Vorteilhaft sind daher Ausführungsformen des Verfahrens, bei denen die vorherbestimmte Menge Δm_{NOX,rech} an Stickoxiden mit einer vorgebbaren Menge Δm_{NOx,threshold} bzw. der vorherbestimmte Sättigungsgrad ϕ_{LNT,rech} mit einem vorgegebenen Sättigungsgrad ϕ_{LNT, threshold} verglichen wird und
■ die rechnerische Simulation mit einer vergrößerten Zeitspanne Δtᵢ₊₁ > Δtᵢ erneut durchgeführt wird, und/oder
■ der Oxidationskatalysator und/oder der Speicherkatalysator weiter erwärmt wird,
falls gilt: Δm_{NOx,rech} < Δm_{NOx,threshold} bzw. ϕ_{LNT,rech} > ϕ_{LNT, threshold}

Des weiteren sind Ausführungsformen des Verfahrens vorteilhaft, bei denen die vorherbestimmte Menge Δm_{NOx,rech} an Stickoxiden mit einer vorgebbaren Menge Δm_{NOx,threshold} bzw. der vorherbestimmte Sättigungsgrad ϕ_{LNT,rech} mit einem vorgegebenen Sättigungsgrad ϕ_{LNT,threshold} verglichen wird und das Abgas tatsächlich für die vorgegebene Zeitspanne Δtᵢ mit Reduktionsmitteln zum Reduzieren der Stickoxide angereichert wird, falls gilt: Δm_{NOx,rech} > Δm_{NOx,threshold} bzw. ϕ_{LNT,rech} < ϕ_{LNT, threshold}.

Bezüglich der beiden letztgenannten Ausführungsformen wird Bezug genommen auf die in Zusammenhang mit dem Partikelfilter gemachten Ausführungen.

Vorteilhaft sind auch Ausführungsformen des Verfahrens, bei denen als Zeitpunkt t₁ ein Zeitpunkt vorgegeben wird, der 20 bis 200 Sekunden nach der Beendigung der simulierten Anreicherung des Abgases mit Reduktionsmitteln liegt. Wie bereits erwähnt, haben Untersuchungen gezeigt, dass der Partikelfilter 20 bis 200 Sekunden nach Beendigung der Reinigung des LNT seine maximale Temperatur aufweist. Infolgedessen ist es vorteilhaft, diese Verzögerung zu berücksichtigen und in Kenntnis dieser Verzögerung die Temperatur des Partikelfilters in einem entsprechend großen zeitlichen Abstand abzuschätzen.

Vorteilhaft sind auch Ausführungsformen des Verfahrens, bei denen beim Start der Simulation davon ausgegangen wird, dass die Brennkraftmaschine in der Weise weiter betrieben wird wie zuvor. Bei dieser Ausführungsform wird davon ausgegangen, dass die Brennkraftmaschine stationär betrieben wird, also dass die Betriebsparameter der Brennkraftmaschine, wie beispielsweise Drehzahl, Last bzw. Drehmoment und dergleichen, in einem für das erfindungsgemäßen Verfahren maßgeblichen Zeitfenster unverändert bleiben. Die Berücksichtigung der Betriebsparameter der Brennkraftmaschine im Rahmen des erfindungsgemäßen Verfahrens ist vorteilhaft bzw. erforderlich, da die Betriebsparameter Einfluss haben auf das Temperaturverhalten bzw. die Temperaturen der Brennkraftmaschine, insbesondere auf die Abgastemperatur und den Abgasmassenstrom, die maßgeblich die Temperaturen der Abgasnachbehandlungskomponenten bestimmen bzw. beeinflussen.

Vorteilhaft sind auch Ausführungsformen des Verfahrens, bei denen die Zeitspanne Δtᵢ einem veränderten Betrieb der Brennkraftmaschine angepasst wird. Da die Emissionen der Brennkraftmaschine vom spezifischen momentanen Betriebspunkt der Brennkraftmaschine abhängig sind, ist es vorteilhaft, die Dauer des Reinigungsvorganges des LNT einem veränderten Betrieb der Brennkraftmaschine anzupassen.

Vorteilhaft sind auch Ausführungsformen des Verfahrens, bei denen
■ die Erwärmung des Oxidationskatalysators eingestellt wird, sobald die Temperatur T_{LNT} des Speicherkatalysators eine vorgebbare obere Schwellentemperatur T_{upthreshold,LNT} überschreitet d.h. falls gilt: T_{LNT} > T_{upthreshold,LNT}.

Die Temperatur des Speicherkatalysators (LNT) sollte - wie oben bereits mehrfach erwähnt - zur Vermeidung einer ungewollten Desorption der Stickoxide eine bestimmte obere Schwellentemperatur T_{upthreshold,LNT} nicht überschreiten, beispielsweise T_{upthreshold,LNT} ≈ 450°C. Aus diesem Grund ist es vorteilhaft, die Erwärmung spätestens dann einzustellen, wenn der Speicherkatalysator sein bevorzugtes Temperaturfenster verlässt. Dabei müssen gegebenenfalls nachteilige Auswirkungen auf die HC-Oxidation bzw. HC-Konvertierung in Kauf genommen werden.

Vorteilhaft sind dabei Ausführungsformen des Verfahrens, bei denen
■ im Anschluss an die Einstellung der Erwärmung des Oxidationskatalysators und zum Zweck der Reinigung des Speicherkatalysators das Abgas tatsächlich für die vorgegebene Zeitspanne Δtᵢ mit Reduktionsmitteln angereichert wird.

Die benötigte Dauer bzw. Länge Δtᵢ der Abgasanreicherung kann dabei wieder mittels Simulation berechnet werden, wobei gegebenenfalls ein Sollwert Δm_{Nox,threshold} für die Menge an Stickoxiden, die während der Zeitspanne Δtᵢ im Speicherkatalysator konvertiert werden sollen, bzw. ein Sollwert ϕ_{LNT}, _{threshold} für den Sättigungsgrad des Speicherkatalysators nach Verstreichen der Zeitspanne Δtᵢ berücksichtigt wird.

Vorteilhaft sind auch Ausführungsformen des Verfahrens, bei denen das Abgas tatsächlich für die vorgegebene Zeitspanne Δtᵢ mit Reduktionsmitteln angereichert wird, falls die vorherbestimmte Temperatur T_{DPF} (t₁) im Partikelfilter kleiner ist als eine vorgebbare Grenztemperatur T_{Grenz} d.h. falls gilt: T_{DPF} (t₁) < T_{Grenz}; beispielsweise wenn die Vorrausetzungen für eine Reinigung des Speicherkatalysators gegeben sind.

Auch wenn die für eine Filterregeneration notwendige Regenerationstemperatur voraussichtlich nicht erreicht wird, kann es günstig sein, die Abgasanreicherung einzuleiten, um den Speicherkatalysator zu reinigen, damit die im System befindliche Wärme bzw. die bewusst unter Kraftstoffeinsatz in das System eingebrachte Wärme sinnvoll genutzt wird.

Vorteilhaft sind dabei Ausführungsformen des Verfahrens, bei denen zum Zweck der Erwärmung und Regeneration des Partikelfilters der Oxidationskatalysator des kombinierten Abgasnachbehandlungssystems erwärmt wird.

Die zur Filterregeneration notwendige Dauer dieser - gegebenenfalls erneuten - Erwärmung des Oxidationskatalysators wird dabei vorteilhafterweise mittels rechnerischer Simulation ermittelt.

Dabei sollte die Erwärmung des Oxidationskatalysators unmittelbar mit der Abgasanreicherung einhergehen, um die während der Abgasanreicherung freigesetzte Wärme ebenfalls und zeitgleich nutzen zu können.

Auch bei dieser Ausführungsform bestehen Synergieeffekte zwischen der Reinigung des Speicherkatalysators und der Regeneration des Partikelfilters, da die im System durch die Abgasanreicherung erzeugte Wärme auch zur Filterregeneration genutzt wird.

An dieser Stelle sei angemerkt, dass es vorteilhaft sein kann, stromaufwärts und beabstandet zum Speicherkatalysator einen zusätzlichen Oxidationskatalysator vorzusehen. Dabei soll eine übermäßige unvorteilhafte Erwärmung des LNT verhindert werden, indem stromaufwärts ein zusätzlicher Oxidationskatalysator vorgesehen wird, der zur Oxidation von Methan auf die erforderlichen Temperaturen erwärmt werden kann, ohne dass eine Desorption der im LNT gespeicherten Stickoxide oder eine thermische Alterung zu befürchten ist. Ist zur Aufladung eine Turbine in der Abgasleitung vorgesehen, kann es vorteilhaft sein, einen Interims-Oxidationskatalysator stromaufwärts der Turbine vorzusehen. Vorteilhaft sind des weiteren Ausführungsformen, bei denen stromaufwärts des LNT ein zusätzlicher Speicherkatalysator (LNT) vorgesehen ist. Vorteile bietet diese Ausführungsform - wie die vorherige - dadurch, dass das Abgasnachbehandlungssystem d.h. der Speicherkatalysator näher am Auslass der Brennkraftmaschine positioniert ist, weshalb die den Katalysator durchströmenden Abgase eine höhere Temperatur haben. Bedingt durch die verkürzte Abgasleitung von der Brennkraftmaschine hin zu dem zusätzlichen Speicherkatalysator können die Wärmeverluste des Abgases ebenfalls reduziert werden. Der LNT erreicht - insbesondere nach einem Kaltstart - schneller sein für eine effiziente Konvertierung der Stickoxide erforderliches Temperaturfenster. Zudem bietet ein zusätzlicher Speicherkatalysator zusätzliches Speichervolumen, so dass die Kombination aus den beiden Speicherkatalysatoren weniger häufig gereinigt werden muss als dies bei einem einzelnen Speicherkatalysator erforderlich ist d.h. die Zeitabstände zwischen den Regenerationsphasen können auf diese Weise vergrößert werden.

Vorteilhaft kann es sein, stromabwärts des LNT einen zusätzlichen Speicherkatalysator (LNT) und/oder einen Oxidationskatalysator und/oder einen SCR-Katalysator vorzusehen.

Eine Kombination aus Speicherkatalysator und SCR-Katalysator bietet - in der vorgeschlagenen Reihenfolge - insofern Vorteile, als dass bei der Konvertierung der Stickoxide im Speicherkatalysator das für die Reduzierung der Stickoxide im SCR-Katalysator erforderliche Reduktionsmittel, nämlich Ammoniak, gebildet wird, was üblicherweise gezielt in das Abgas eingebracht werden muss.

Wie bereits in der Beschreibungseinleitung erläutert wurde, sind innermotorische Maßnahmen zur Anreicherung des Abgases mit Reduktionsmitteln bzw. zur Erhöhung der Abgastemperatur grundsätzlich geeignet, und damit auch im Rahmen des erfindungsgemäßen Verfahrens zur Abgasanreicherung oder zur Erwärmung der Abgasnachbehandlungskomponenten einsetzbar. Nachteile wie die zunehmende Ölverdünnung infolge einer Nacheinspritzung von Kraftstoff oder der Anstieg der Methan-Emissionen werden dann in Kauf genommen.

Vorteilhaft sind daher Ausführungsformen des Verfahrens, bei denen die Brennkraftmaschine zur Anreicherung des Abgases mit Reduktionsmitteln unterstöchiometrisch (λ < 1) d.h. fett betrieben wird. Wie bereits in der Beschreibungseinleitung ausgeführt wurde, führt eine Verbrennung des in den Brennraum eingespritzten Kraftstoffes unter Sauerstoffmangel zu einer Anreicherung des Abgasstromes mit unverbrannten Kohlenwasserstoffen, die dann als Reduktionsmittel zur Reinigung des LNT dienen. Dabei ist zu berücksichtigen, dass es sich bei dem unterstöchiometrischen Betrieb der Brennkraftmaschine um eine innermotorische Maßnahem handelt, die zu erhöhten Methan-Emissionen führt, weshalb der Oxidationskatalysator ein entsprechend hohe Temperatur - 500°C bis 550°C - aufweisen muss, bevor in den unterstöchiometrischen Betrieb gewechselt wird.

Der Übergang zu einem fetten bzw. fetteren Motorenbetrieb kann auch durch die Rückführung heißen Abgases realisiert bzw. unterstützt werden, da auch dies zu einer Abnahme des Sauerstoffgehalts der Zylinderfrischladung führt. Bei Dieselmotoren kann die Drosselung der angesaugten Luft im Ansaugtrakt Verwendung finden.

Vorteilhaft sind auch Ausführungsformen des Verfahrens, bei denen zur Anreicherung des Abgases mit Reduktionsmitteln Kraftstoff mittels einer Kraftstoffdüse in die mindestens eine Abgasleitung eingebracht wird. Diese Ausführungsform hat den Vorteil, dass der Betrieb der Brennkraftmaschine unabhängig von der Steuerung der Abgasnachbehandlungssysteme wird, d.h. die Brennkraftmaschine kann mager d.h. überstöchiometrisch betrieben werden und gleichzeitig kann eine Reinigung des LNT (deNOₓ) eingeleitet und durchgeführt werden. Zudem werden bei der Einspritzung von Reduktionsmittel bzw. Kraftstoff direkt in die Abgasleitung die durch innermotorische Maßnahmen hervorgerufenen negativen Auswirkungen, insbesondere eine erhöhte Methan-Emission, vermieden.

Darüber hinaus ist aber auch eine Kombination der beiden zuvor erwähnten Maßnahmen, nämlich der innermotorischen Maßnahmen, beispielsweise der Anfettung der Verbrennung, einerseits und des Einspritzens von Reduktionsmittel direkt in den Abgastrakt andererseits, zielfährend bei der Anreicherung des Abgases mit Reduktionsmitteln, wobei die Methan-Emissionen nur anteilig auftreten bzw. gemindert werden.

Vorteilhaft sind Ausführungsformen des Verfahrens, bei denen die Erwärmung des Oxidationskatalysators durch eine Erhöhung der Abgastemperatur realisiert wird, wobei die Erhöhung der Abgastemperatur vorzugsweise durch innermotorische Maßnahmen erzielt wird.

Innermotorische Maßnahmen können also sowohl zur Anreicherung des Abgases mit Reduktionsmittel als auch zur Erwärmung des Oxidationskatalysators herangezogen werden. Eine innermotorische Maßnahme zur Erhöhung der Abgastemperatur ist beispielsweise die gezielte Umgehung eines im Ansaugtrakt vorgesehenen Ladeluftkühlers, wodurch die Temperatur der Zylinderfrischladung angehoben wird. Mit einer Reduzierung des Sauerstoffüberschusses der Zylinderfrischladung kann die Abgastemperatur ebenfalls erhöht werden.

Vorteilhaft sind dabei auch Ausführungsformen des Verfahrens bei denen die Erhöhung der Abgastemperatur durch mindestens eine Nacheinspritzung von Kraftstoff in den mindestens einen Zylinder realisiert wird, vorzugsweise während der Expansionsphase. Dadurch, dass der Verbrennung mehr Kraftstoff zur Verfügung gestellt wird, wird auch mehr Energie bei der chemischen Umsetzung des Kraftstoffes freigesetzt, die dann zur Erwärmung der Verbrennungsgase herangezogen wird.

Vorteilhaft sind auch Ausführungsformen des Verfahrens, bei denen die Erhöhung der Abgastemperatur durch eine Rückführung von Abgas (AGR) realisiert wird. Die heißen, in den Brennraum zurückgeführten Abgase erhöhen die Temperatur der Zylinderfrischladung.

Vorteilhaft sind bei Dieselmotoren des weiteren Ausführungsformen des Verfahrens, bei denen die Erhöhung der Abgastemperatur durch eine verstärkte Drosselung im Ansaugtrakt des Dieselmotors realisiert wird.

Vorteilhaft sind ebenfalls Ausführungsformen des Verfahrens, bei denen die Erhöhung der Abgastemperatur durch Absenkung des Luftverhältnisses λ bei magerem d.h. überstöchiometrischem Betrieb (λ > 1) der Brennkraftmaschine realisiert wird.

Vorteilhaft sind auch Ausführungsformen des Verfahrens, bei denen die Erhöhung der Abgastemperatur dadurch realisiert wird, dass Kraftstoff in die mindestens eine Abgasleitung stromaufwärts des Oxidationskatalysators eingebracht und oxidiert wird. Damit kann die Einspritzung von Kraftstoff in die Abgasleitung nicht nur zur Anreicherung des Abgases mit Reduktionsmittel, sondern auch zur Anhebung der Abgastemperatur genutzt werden.

Vorteilhaft sind Ausführungsformen des Verfahrens, bei denen die Anreicherung des Abgases mit Reduktionsmitteln intermittierend vorgenommen wird. Diese Variante eignet sich besonderes für eine nachhaltige Oxidation der unverbrannten Kohlenwasserstoffe, also insbesondere für die Fälle, in denen hohe Methan-Mengen zu konvertieren d.h. zu oxidieren sind. Folglich ist die in Rede stehende Verfahrensvariante besonders günstig beim Einsatz innermotorischer Maßnahmen zur Anreicherung des Abgases mit Reduktionsmittel oder zur Erwärmung des Abgases.

Vorteilhaft sind dabei Ausführungsformen des Verfahrens, bei denen zur intermittierenden Anreicherung des Abgase mit Reduktionsmittel die Brennkraftmaschine abwechselnd unterstöchiometrisch (λ < 1) d.h. fett und überstöchiometrisch (λ > 1) d.h. mager betrieben wird, so dass die sauerstoffarmen fetten Betriebsphasen der Brennkraftmaschine jeweils von einer sauerstoffreichen mageren Betriebsphase unterbrochen werden. Dabei ergibt sich gewissermaßen ein pulsierender Betrieb der Brennkraftmaschine für eine vorgebbare Zeitspanne Δtᵢ. Gegebenenfalls ist bereits ein einzelner Puls d.h. ein einmaliger Übergang in den fetten Betrieb ausreichend für die Reinigung des LNT.

Ein derartiger Betrieb der Brennkraftmaschine gewährleistet zum einen die Bereitstellung des für die Oxidation von unverbrannten Kohlenwasserstoffen notwendigen Sauerstoffes und gleichzeitig auch den für die Reinigung des Speicherkatalysators (deNOₓ) erforderlichen fetten Betrieb. Hinsichtlich der Verminderung der HC-Emissionen ist diese Verfahrensvariante vorteilhaft, wobei die Konvertierung der gespeicherten Stickoxide im LNT nach wie vor stattfindet, aber die Konvertierungsrate infolge des phasenweisen Sauerstoffüberschusses leicht abnimmt. Letzteres ist auch dadurch bedingt, dass während des mageren Betriebs Sauerstoff im LNT aufgenommen und gespeichert wird und dieser bzw. die Freigabe dieses Sauerstoffes die Reduktion der Stickoxide (NOₓ) während des fetten Betriebs der Brennkraftmaschine nachteilig beeinflusst d. h. mindert.

Vorteilhaft sind auch Ausführungsformen des Verfahrens, bei denen die sauerstoffarmen fetten Betriebsphasen der Brennkraftmaschine d.h. die vorgebbare Zeitspanne Δtᵢ weniger als 8 Sekunden, vorzugsweise 2 bis 3 Sekunden, dauern, wie Versuche gezeigt haben.

Erfindungsgemäß wird die Temperatur des Oxidationskatalysators berücksichtigt, wobei die Temperatur entweder mittels eines Temperatursensors direkt gemessen oder berechnet wird. Die Berechnung der Temperatur kann sich dabei beispielsweise auf an anderer Stelle im Abgastrakt erfasste Temperaturen stützen. Auf diese Weise können bereits vorhandene Sensoren genutzt werden, beispielsweise für eine Onboard-Diagnose (OBD) vorgesehene Sensoren

Im folgenden wird die Erfindung anhand von drei Verfahrensvarianten gemäß den Figuren 1 bis 3 näher beschrieben. Hierbei zeigt:
- Fig. 1: schematisch eine erste Ausführungsform des Verfahrens in Gestalt eines Flussdiagramms,
- Fig. 2: schematisch eine zweite Ausführungsform des Verfahrens in Gestalt eines Flussdiagramms, und
- Fig. 3: schematisch eine dritte Ausführungsform des Verfahrens in Gestalt eines Flussdiagramms.

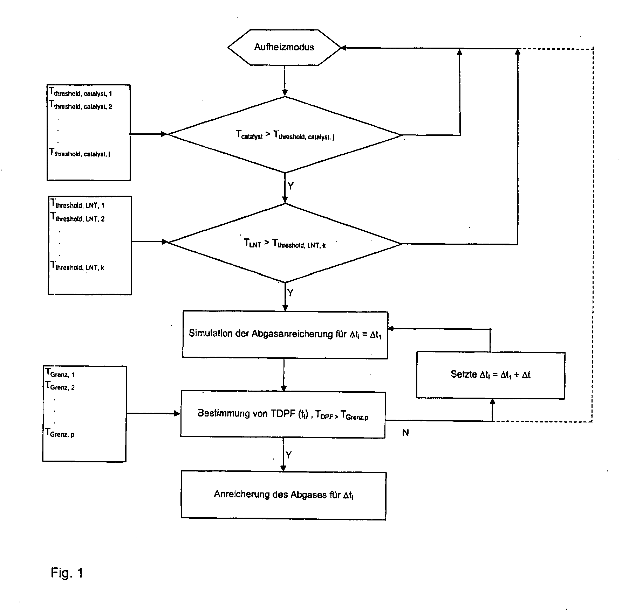

Figur 1 zeigt schematisch eine erste Ausführungsform des Verfahrens in Gestalt eines Flussdiagramms. Das Verfahren dient der Steuerung der Abgasnachbehandlung und der Vorherbestimmung einer zukünftigen Temperatur T_{DPF} (t₁) im Partikelfilter einer Brennkraftmaschine.

Dabei wird von einem kombinierten Abgasnachbehandlungssystem ausgegangen, das
■ einen Speicherkatalysator (LNT) zum Speichern und Reduzieren der im Abgas befindlichen Stickoxide (NOₓ),
■ einen Partikelfilter zum Sammeln und Verbrennen der im Abgas befindlichen Rußpartikel, der zusammen mit dem Speicherkatalysator integral als bauliche Einheit ausgebildet ist, und
■ einen stromaufwärts des Speicherkatalysators und des Partikelfilters angeordneten Oxidationskatalysator, insbesondere zur Oxidation des im Abgas befindlichen Kohlenmonoxides (CO) und der unverbrannten Kohlenwasserstoffe (HC), umfasst.

Zu Beginn des Verfahrens wird entsprechend einer bestimmten Zielsetzung, eine Mindesttemperatur T_{threshold,catalyst,j} für den Oxidationskatalysator vorgegeben.

Wird die Anreicherung des Abgases mit Reduktionsmittel durch Einspritzung von Kraftstoff in die Abgasleitung realisiert, kann es beispielsweise ausreichend sein, eine Schwellentemperatur T_{threshold,catalyst,1} ≈ 200°C - 250°C vorzugeben. Diese Temperatur des Oxidationskatalysators sorgt zusammen mit den im Oxidationskatalysator ablaufenden exothermen Reaktionen dafür, dass der stromabwärts gelegene Speicherkatalysator in seinem für die Reinigung bevorzugten Temperaturfenster von 250°C bis 450°C arbeitet.

Wird die Anreicherung des Abgases mit Reduktionsmittel hingegen mittels innermotorischer Maßnahmen realisiert, wird es erforderlich, große Mengen an Methan zu oxidieren, weshalb die Vorgabe einer höheren Temperatur erforderlich und zielfährend ist, beispielsweise T_{threshold,catalyst,2} ≈ 500°C - 550°C.

Die Anhebung der Temperatur des Oxidationskatalysators d.h. die Vorgabe einer Temperatur, die höher ist als 250°C, kann ebenfalls hilfreich sein, falls eine Entschwefelung (deSOx) des Speicherkatalysators oder eine Regeneration des Partikelfilters beabsichtigt ist. Dies erfordert üblicherweise Temperaturen des LNT's von 600°C bis 700 °C bevor der LNT mit einem Reduktionsmittel zur Reduktion der Schwefeloxide (SOₓ) versorgt wird bzw. Filtertemperaturen von etwa 550°C. Zur Erzielung dieser Temperaturen kann der Oxidationskatalysator bzw. die Erwärmung des Oxidationskatalysators genutzt werden, zumindest unterstützend. Die Erwärmung des Oxidationskatalysators und die im Oxidationskatalysator ablaufenden exothermen Reaktionen sorgen für eine Anhebung der Abgastemperatur und eine Erwärmung der stromabwärts vorgesehenen Abgasnachbehandlungskomponenten d.h. auch für eine Erwärmung des Speicherkatalysators.

Die Erwärmung des Speicherkatalysators auf eine vorgegebene Temperatur T_{threshold,LNT} kann bei der Durchführung des erfindungsgemäßen Verfahrens sowohl direkt als auch indirekt - d.h. über eine Erwärmung des Oxidationskatalysators oder des Abgases - erfolgen. Dies wird in Figur 1 durch die gepunktete Linie angedeutet.

Die momentane Temperatur T_{catalyst} des Oxidationskatalysators wird erfasst d. h. gemessen oder berechnet und mit der vorgegebenen Temperatur T_{threshold,catalyst,j} verglichen. Falls die momentane Temperatur T_{catalyst} des Oxidationskatalysators kleiner ist als die vorgegebene Mindesttemperatur T_{threshold,catalyst,j} d.h. T_{catalyst} < T_{threshold,catalyst,j}, wird der Oxidationskatalysator erwärmt bis gilt: T_{catalyst} **≥** T_{threshold,catalyst,j}.

Die Temperatur T_{LNT} des Speicherkatalysators wird ebenfalls berücksichtigt. Da der Speicherkatalysator zusammen mit dem Partikelfilter als bauliche Einheit ausgebildet ist, repräsentiert diese Temperatur gleichzeitig auch die momentane Temperatur T_{DPF} des Partikelfilters.

Der Speicherkatalysator wird auf eine vorgebbare Temperatur T_{threshold,LNT} erwärmt, falls die momentane Temperatur T_{LNT} des Speicherkatalysators kleiner ist als die vorgegebene Temperatur Tthreshold,_{LNT} d.h. T_{LNT} < Tthreshold,_{LNT.} Die Höhe der vorgegebenen Temperatur hängt - wie beim Oxidationskatalysator - von der konkreten Zielsetzung ab, nämlich davon, ob eine Entschwefelung (deSOx), eine Reinigung des LNT (deNOx) und/oder eine Filterregeneration (deSoot) durchgeführt werden soll.

Wird der Abgasstrom zum Zweck der Reinigung bzw. Entschwefelung des Speicherkatalysators angereichert und die Brennkraftmaschine anschließend wieder in den mageren Betrieb überführt bzw. die Einspritzung von Kraftstoff oder dergleichen direkt in die Abgasleitung eingestellt, weist der Abgasstrom wieder den für die Filterregeneration notwendigen Sauerstoffüberschuss auf, so dass die Bedingungen für eine Filterregeneration, nämlich die erforderlich hohen Temperaturen und der notwendige Sauerstoff für die Verbrennung des gesammelten Rußes, vorliegen. Etwa 20 bis 200 Sekunden nach Beendigung des Anreicherungsvorganges erreicht der Partikelfilter seine maximale Temperatur.

Die oben beschriebenen Zusammenhänge sollen gemäß dem erfindungsgemäßen Verfahren, dazu genutzt werden, mögliche Synergieeffekte beim Betrieb der einzelnen Abgasnachbehandlungskomponenten zu realisieren und zu nutzen, wobei es sich anbietet, im Anschluss an die Reinigung des Speicherkatalysators (deNOₓ) eine Filterregeneration (deSoot) vorzunehmen, so dass eine gezielte isolierte Filterregeneration weniger häufig durchzuführen ist als nach dem Stand der Technik üblich. Dies führt dazu, dass der Kraftstoffmehrverbrauch infolge Reinigung bzw. Regeneration der jeweiligen Abgasnachbehandlungssysteme im Vergleich zu aus dem Stand der Technik bekannten Verfahren niedriger ausfällt.

Da der Partikelfilter seine maximale Temperatur erst zeitverzögert erreicht, wird die Anreicherung des Abgases mit Reduktionsmitteln erfindungsgemäß zunächst simuliert, um die Filtertemperatur zu einem vorgegebenen Zeitpunkt t₁ abschätzen zu können. Auf der Grundlage dieser rechnerischen Simulation der Abgasanreicherung bzw. der auf diese Weise ermittelten Filtertemperatur T_{DPF} (t₁) wird dann entschieden, ob tatsächlich eine Abgasanreicherung vorgenommen wird.

Hierfür wird eine Grenztemperatur T_{Grenz} als Mindesttemperatur für den Partikelfilter vorgegeben, wobei zum Zweck der Filterregeneration das Abgas tatsächlich für die vorgegebene Zeitspanne Δtᵢ mit Reduktionsmitteln angereichert wird, falls die vorherbestimmte Temperatur T_{DPF} (t₁) im Partikelfilter größer ist als eine vorgebbare Grenztemperatur T_{Grenz} d.h. falls gilt: T_{DPF} (t₁) > T_{Grenz.}

Als Grenztemperatur T_{Grenz,1} kann beispielsweise die Filterregenerationstemperatur angesetzt werden, welche bei nicht vorhandener katalytischer Unterstützung etwa 550°C beträgt. Die Grenztemperatur T_{Grenz,2} kann, falls der Partikelfilter eine katalytische Beschichtung aufweist, auch niedriger angesetzt werden.

Ist die vorherbestimmte Temperatur T_{DPF} (t₁) im Partikelfilter kleiner als die vorgegebene Grenztemperatur T_{Grenz,p} d.h. gilt: T_{DPF} (t₁) < T_{Grenz,p}, wird die rechnerische Simulation erneut mit einer vergrößerten Zeitspanne Δtᵢ₊₁ > Δtᵢ durchgeführt und/oder der Oxidationskatalysator und/oder der Speicherkatalysator weiter erwärmt wird. Letzteres ist in Figur 1 durch eine gestrichelte Linie kenntlich gemacht.

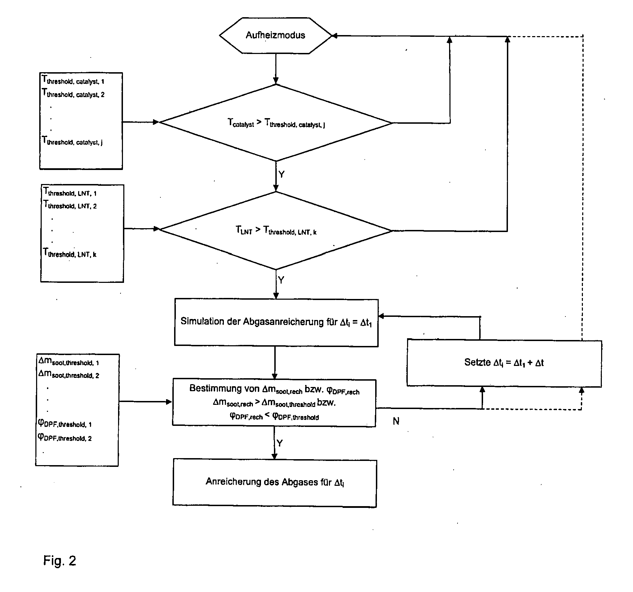

Figur 2 zeigt schematisch eine zweite Ausführungsform des Verfahrens in Gestalt eines Flussdiagramms. An dieser Stelle soll nur auf die Unterschiede zu dem in Figur 1 dargestellten Verfahren eingegangen werden, weshalb im übrigen Bezug genommen wird auf Figur 1 und die im Zusammenhang mit dieser Figur gemachten Ausführungen.

Bei der in Figur 2 gezeigten Verfahrensvariante wird zwar die Filtertemperatur T_{DPF} (t₁) mittels rechnerischer Simulation abgeschätzt (nicht dargestellt). Die so ermittelte Temperatur T_{DPF} (t₁) wird aber nicht bzw. nicht alleine zur Entscheidungsgrundlage einer möglichen Abgasanreicherung gemacht.

Vielmehr wird mittels Simulation die Menge an im Partikelfilter oxidierten Ruß Δm_{soot,rech} bzw. die verbleibende Beladung ϕ_{DPF,rech} des Partikelfilters vorherbestimmt, ausgehend davon, dass das Abgas für die vorgegebene Zeitspanne Δtᵢ mit Reduktionsmitteln angereichert wird.

Bei den beiden genannten Größen - Δm_{soot,rech} und ϕ_{DPF,rech} - handelt es sich um Zustandgrößen des Partikelfilters, die gemäß dem erfindungsgemäßen Verfahren dazu herangezogen werden sollen, zu entscheiden, ob das Abgas tatsächlich angereichert wird. Es ist vorteilhaft, die Beladung des Filters am Ende einer möglichen Regeneration bzw. die Menge an während der Regeneration verbranntem Ruß zu kennen. Dies zum einen, um entscheiden zu können, ob eine Filterregeneration notwendig ist, und um abwägen zu können, ob eine Filterregenration lohnend erscheint d.h. ob die Regenration in einem sinnvollen Verhältnis zum Aufwand d.h. zum eingesetzten Kraftstoff steht.

Die vorherbestimmte Menge Δm_{soot,rech} an Ruß wird mit einer vorgebbaren Menge Δm_{soot,threshold} bzw. die vorherbestimmte Beladung ϕ_{DPF,rech} des Partikelfilters mit einer vorgebbaren Beladung ϕ_{DPF,threshold} des Partikelfilters verglichen. Ergibt der Vergleich, dass zum jetzigen Zeitpunkt die Sollwerte - Δm_{soot,threshold} bzw. ϕ_{DPF,threshold} - nicht realisiert werden können, bestehen verschiedene Optionen.

Die rechnerische Simulation kann erneut mit einer vergrößerten Zeitspanne Δtᵢ₊₁ > Δtᵢ durchgeführt werden. Alternativ oder zusätzlich kann der Oxidationskatalysator und/oder der Speicherkatalysator weiter erwärmt werden.

Werden die vorgegeben Sollwerte eingehalten, kann die Abgasanreicherung tatsächlich erfolgen, um die zuvor rechnerisch mittels Simulation ermittelten Werte zu realisieren.
D.h. das Abgas wird tatsächlich für die vorgegebene Zeitspanne Δtᵢ mit Reduktionsmitteln angereichert wird, falls gilt: Δm_{soot,rech} > Δm_{soot,threshold} bzw. ϕ_{DPF,rech} < ϕ_{DPF, threshold}.

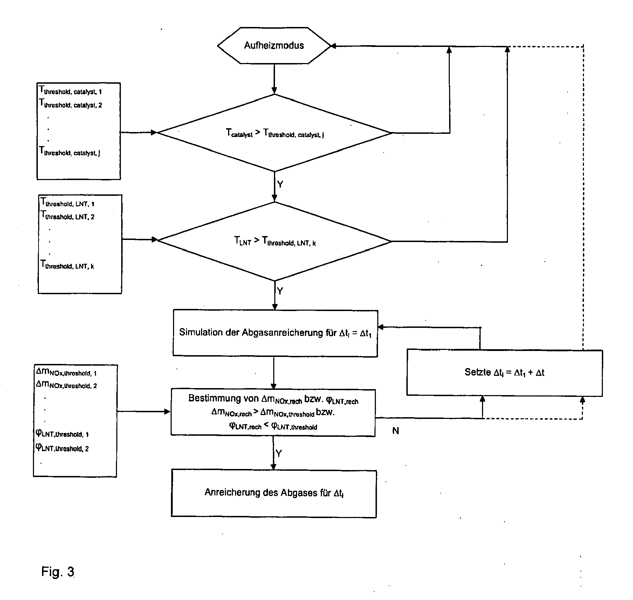

Figur 3 zeigt schematisch eine dritte Ausführungsform des Verfahrens in Gestalt eines Flussdiagramms. An dieser Stelle soll nur auf die Unterschiede zu der in Figur 1 dargestellten Verfahrenvariante eingegangen werden, weshalb im übrigen Bezug genommen wird auf Figur 1 und die im Zusammenhang mit dieser Figur gemachten Ausführungen.

Bei der in Figur 3 gezeigten Verfahrensvariante wird zwar die Filtertemperatur T_{DPF} (t₁) mittels rechnerischer Simulation abgeschätzt (nicht dargestellt). Die so ermittelte Temperatur T_{DPF} (t₁) wird aber nicht bzw. nicht alleine zur Entscheidungsgrundlage einer möglichen Abgasanreicherung gemacht.

Vielmehr wird mittels Simulation die Menge Δm_{NOx,rech} an Stickoxiden (NOₓ), die während der Zeitspanne Δtᵢ im Speicherkatalysator konvertiert werden würde, bzw. der Sättigungsgrad ϕ_{LNT,rech} des Speicherkatalysators nach Verstreichen der vorgegebenen Zeitspanne Δtᵢ d.h. gegen Ende der LNT-Reinigung vorherbestimmt.

Vergleichbar mit der Beladung des Partikelfilters (siehe Figur 2) ist es im Hinblick auf den Speicherkatalysator von Interesse den Sättigungsgrad des LNT zu kennen d.h. Informationen über die Speicherkapazität vorliegen zu haben. Eine Reinigung des Speicherkatalysators wird somit nicht in jedem Fall durchgeführt, nur weil dies möglich ist d.h. weil die entsprechenden Temperaturen, insbesondere T_{DPF} (t₁), vorliegen. Wenn der erzielte Reinigungseffekt Δm_{NOx,rech} nur mit einem unverhältnismäßig hohen Kraftstoffaufwand realisiert werden kann, ist es unter Umständen sinnvoll, von einer Abgasanreicherung abzusehen.

Die vorherbestimmte Menge Δm_{NOX,rech} an Stickoxiden wird daher mit einer vorgebbaren Menge Δm_{NOx,threshold} bzw. der vorherbestimmte Sättigungsgrad ϕ_{LNT,rech} mit einem vorgegebenen Sättigungsgrad _{ϕLNT,threshold} verglichen.

Gilt: Δm_{NOx,rech} > Δm_{NOx,threshold} bzw. ϕ_{LNT,rech} < ϕ_{LNT,threshold}, wird das Abgas tatsächlich für die vorgegebene Zeitspanne Δtᵢ mit Reduktionsmitteln zum Reduzieren der Stickoxide angereichert.

Andernfalls wird die rechnerische Simulation mit einer vergrößerten Zeitspanne Δtᵢ₊₁ > Δtᵢ erneut durchgeführt und/oder der Oxidationskatalysator und/oder der Speicherkatalysator weiter erwärmt.

Die in den Figuren dargestellten Verfahrensvarianten sind nur Beispiele. Kombinationen dieser Ausführungsformen sind ebenfalls möglich. So können beispielsweise die Filtertemperatur T_{DPF,} die Beladung ϕ_{DPF,rech} des Filters und die Sättigung ϕ_{LNT,rech} des Speicherkatalysators in der Zusammenschau dazu herangezogen werden, um zu entscheiden, ob tatsächlich eine Abgasanreicherung durchgeführt wird.

### Bezugszeichen

- AGR: Abgasrückführung
- CO: Kohlenmonoxid
- deNOₓ: Reinigung des Speicherkatalysators
- deSoot: Regeneration des Partikelfilters
- deSOₓ: Desulfuration, Entschwefelung
- HC: unverbrannte Kohlenwasserstoffe
- NOₓ: Stickoxide
- LNT: Lean NOₓ Trap
- Δm_{NOx,rech}: rechnerisch ermittelte Menge an im Speicherkatalysator konvertierten Stickoxiden (NOₓ) während der Abgasanreicherung
- Δm_{NOx,threshold}: vorgegebene Menge an im Speicherkatalysator zu konvertierenden Stickoxiden (NOₓ) während der Abgasanreicherung (Sollwert)
- Δm_{soot,rech}: rechnerisch ermittelte Menge an im Partikelfilter oxidiertem Ruß
- Δm_{soot,threshold}: vorgegebene Menge an zu oxidierendem Ruß (Sollwert)
- ϕ_{DPF,rech}: verbleibende, rechnerisch ermittelte Beladung des Partikelfilters nach Regeneration
- ϕ_{DPF,threshold}: vorgegebene Beladung des Partikelfilters (Sollwert)
- ϕ_{LNT,rech}: rechnerisch ermittelter Sättigungsgrad des Speicherkatalysators nach Verstreichen der Zeitspanne Δtᵢ
- ϕ_{LNT,threshold}: vorgegebener Sättigungsgrad des Speicherkatalysators (Sollwert)
- SCR: Selective Catalytic Reduction
- SOₓ: Schwefeloxide
- t₁: vorgebbarer Zeitpunkt
- Δtᵢ: vorgegebene Zeitspanne für Abgasanreicherung
- T_{catalyst}: momentane Temperatur des Oxidationskatalysators
- T_{DPF}: zukünftige Temperatur im Partikelfilter
- T_{Grenz}: vorgebbare Grenztemperatur für den Partikelfilter
- T_{LNT}: Temperatur im Speicherkatalysator
- T_{threshold,cat}: vorgegebene Schwellentemperatur für den Oxidationskatalysator
- T_{threshold,LNT}: vorgegebene untere Schwellentemperatur für den Speicherkatalysator
- T_{upthreshold,LNT}: vorgegebene obere Schwellentemperatur für den Speicherkatalysator

## Patentansprüche

1. Verfahren zur Steuerung einer Abgasnachbehandlung und zur Vorherbestimmung einer zukünftigen Temperatur T_{DPF} (t₁) in einem Partikelfilter einer Brennkraftmaschine, die mindestens einen Zylinder und mindestens eine Abgasleitung zum Abführen der Abgase aus diesem mindestens einen Zylinder aufweist und bei der ein kombiniertes Abgasnachbehandlungssystem zur Nachbehandlung des Abgases in der mindestens einen Abgasleitung vorgesehen ist, wobei das kombinierte Abgasnachbehandlungssystem
■ einen Speicherkatalysator (LNT) zum Speichern und Reduzieren der im Abgas befindlichen Stickoxide (NOₓ),
■ einen Partikelfilter zum Sammeln und Verbrennen der im Abgas befindlichen Rußpartikel, der zusammen mit dem Speicherkatalysator integral als bauliche Einheit ausgebildet ist, und
■ einen stromaufwärts des Speicherkatalysators und des Partikelfilters angeordneten Oxidationskatalysator, insbesondere zur Oxidation des im Abgas befindlichen Kohlenmonoxides (CO) und der unverbrannten Kohlenwasserstoffe (HC),
umfasst, **dadurch gekennzeichnet, dass**
■ der Oxidationskatalysator des kombinierten Abgasnachbehandlungssystems auf eine vorgebbare Temperatur T_{threshold,cat} erwärmt wird, falls die momentane Temperatur T_{catalyst} des Oxidationskatalysators kleiner ist als die vorgegebene Temperatur T_{threshold,cat} d.h. T_{catalyst} < T_{theshold,cat}, und
■ der Speicherkatalysator auf eine vorgebbare Temperatur T_{threshold,LNT} erwärmt wird, falls die momentane Temperatur T_{LNT} des Speicherkatalysators kleiner ist als die vorgegebene Temperatur T_{threshold,LNT} d.h. T_{LNT} < T_{threshold,LNT}, und anschließend
■ eine rechnerische Simulation durchgeführt wird, die - ausgehend davon, dass das Abgas für eine vorgebbare Zeitspanne Δtᵢ mit Reduktionsmitteln zum Reduzieren der Stickoxide angereichert wird - die Temperatur T_{DPF} (t₁) zu einem vorgebbaren Zeitpunkt t₁ im Partikelfilter vorherbestimmt.

2. Verfahren nach Anspruch 1, **dadurch gekennzeichnet, dass** zum Zweck der Filterregeneration das Abgas tatsächlich für die vorgegebene Zeitspanne Δtᵢ mit Reduktionsmitteln angereichert wird, falls die vorherbestimmte Temperatur T_{DPF} (t₁) im Partikelfilter größer ist als eine vorgebbare Grenztemperatur T_{Grenz} d. h. falls gilt: T_{DPF} (t₁) > T_{Grenz}.

3. Verfahren nach Anspruch 1 oder 2, **dadurch gekennzeichnet, dass** mittels einer rechnerischen Simulation die Menge an im Partikelfilter oxidierten Ruß Δm_{soot,rech} bzw. die verbleibende Beladung ϕ_{DPF,rech} des Partikelfilters vorherbestimmt wird, für den Fall, dass das Abgas für die vorgegebene Zeitspanne Δtᵢ mit Reduktionsmitteln angereichert wird.

4. Verfahren nach Anspruch 3, **dadurch gekennzeichnet, dass** die vorherbestimmte Menge Δm_{soot,rech} an Ruß mit einer vorgebbaren Menge Δm_{soot,threshold} bzw. die vorherbestimmte Beladung ϕ_{DPE,rech} des Partikelfilters mit einer vorgebbaren Beladung ϕ_{DPF,threshold} des Partikefilters verglichen wird und
■ die rechnerische Simulation mit einer vergrößerten Zeitspanne Δtᵢ₊₁ > Δtᵢ erneut durchgeführt wird, und/oder
■ der Oxidationskatalysator und/oder der Speicherkatalysator weiter erwärmt wird,
falls gilt: Δm_{soot,rech} < Δm_{soot,threshold} bzw. ϕ_{DPF,rech} > ϕ_{DPF, threshold}

5. Verfahren nach Anspruch 3, **dadurch gekennzeichnet, dass** die vorherbestimmte Menge Δm_{soot,rech} an Ruß mit einer vorgebbaren Menge Δm_{soot,threshold} bzw. die vorherbestimmte Beladung ϕ_{DPF,rech} des Partikelfilters mit einer vorgebbaren Beladung ϕ_{DPF,threshold} des Partikelfilters verglichen wird und das Abgas tatsächlich für die vorgegebene Zeitspanne Δnti mit Reduktionsmitteln angereichert wird, falls gilt: Δm_{soot,rech} > Δm_{soot,threshold} bzw. ϕ_{DPF,rech} < ϕ_{DPF, threshold}.

6. Verfahren nach einem der vorherigen Ansprüche, **dadurch gekennzeichnet, dass** die Menge Δm_{NOx,rech} an Stickoxiden (NOₓ), die während der Zeitspanne Δtᵢ im Speicherkatalysator konvertiert wird, bzw. der Sättigungsgrad ϕ_{LNT,ech} des Speicherkatalysators nach Verstreichen der Zeitspanne Δtᵢ vorherbestimmt wird.

7. Verfahren nach Anspruch 6, **dadurch gekennzeichnet, dass** die vorherbestimmte Menge Δm_{NOX,rech} an Stickoxiden mit einer vorgebbaren Menge Δm_{NOx,threshold} bzw. der vorherbestimmte Sättigungsgrad ϕ_{LNT,rech} mit einem vorgegebenen Sättigungsgrad ϕ_{LNT, threshold} verglichen wird und
■ die rechnerische Simulation mit einer vergrößerten Zeitspanne Δtᵢ₊₁ > Δtᵢ erneut durchgeführt wird, und/oder
■ der Oxidationskatalysator und/oder der Speicherkatalysator weiter erwärmt wird,
falls gilt: Δm_{NOx,reeh} < Δm_{NOx,threshold} bzw. ϕ_{LNT,rech} > ϕ_{LNT, threshold}

8. Verfahren nach Anspruch 6, **dadurch gekennzeichnet, dass** die vorherbestimmte Menge Δm_{NOx.rech} an Stickoxiden mit einer vorgebbaren Menge Δm_{NOx,threshold} bzw. der vorherbestimmte Sättigungsgrad ϕ_{LNT,rech} mit einem vorgegebenen Sättigungsgrad ϕ_{LNT, threshold} verglichen wird und das Abgas tatsächlich für die vorgegebene Zeitspanne Δtᵢ mit Reduktionsmitteln zum Reduzieren der Stickoxide angereichert wird, falls gilt: Δm_{NOx,rech} > Δm_{NOx,threshold} bzw. ϕ_{LNT,rech} < ϕ_{LNT, threshold}.

9. Verfahren nach einem der vorherigen Ansprüche, **dadurch gekennzeichnet, dass** als Zeitpunkt t₁ ein Zeitpunkt vorgegeben wird, der 20 bis 200 Sekunden nach der Beendigung der simulierten Anreicherung des Abgases mit Reduktionsmitteln liegt.

10. Verfahren nach einem der vorherigen Ansprüche, **dadurch gekennzeichnet, dass** beim Start der Simulation davon ausgegangen wird, dass die Brennkraftmaschine in der Weise weiterbetrieben wird wie zuvor.

11. Verfahren nach einem der Ansprüche 1 bis 9, **dadurch gekennzeichnet, dass** die Zeitspanne Δtᵢ einem veränderten Betrieb der Brennkraftmaschine angepasst wird.

12. Verfahren nach einem der vorherigen Ansprüche, **dadurch gekennzeichnet, dass**
■ die Erwärmung des Oxidationskatalysators eingestellt wird, sobald die Temperatur T_{LNT} des Speicherkatalysators eine vorgebbare obere Schwellentemperatur T_{upthreshold,LNT} überschreitet d.h. falls gilt: T_{LNT} > T_{upthreshold,LNT}.

13. Verfahren nach Anspruch 12, **dadurch gekennzeichnet, dass**
■ im Anschluss an die Einstellung der Erwärmung des Oxidationskatalysators und zum Zweck der Reinigung des Speicherkatalysators das Abgas tatsächlich für die vorgegebene Zeitspanne Δtᵢ mit Reduktionsmitteln angereichert wird.

14. Verfahren nach Anspruch 1, **dadurch gekennzeichnet, dass** das Abgas tatsächlich für die vorgegebene Zeitspanne Δtᵢ mit Reduktionsmitteln angereichert wird, falls die vorherbestimmte Temperatur T_{DPF} (t₁) im Partikelfilter kleiner ist als eine vorgebbare Grenztemperatur T_{Grenz} d.h. falls gilt: T_{DPF} (t₁) < T_{Grenz}.

15. Verfahren nach Anspruch 14, **dadurch gekennzeichnet, dass** zum Zweck der Erwärmung des Partikelfilters der Oxidationskatalysator des kombinierten Abgasnachbehandlungssystems erwärmt wird.

## Claims

1. Method for controlling an exhaust-gas aftertreatment and for predetermining a future temperature T_{DPF} (t₁) in a particle filter of an internal combustion engine which has at least one cylinder and at least one exhaust line for discharging the exhaust gases out of said at least one cylinder and in which is provided a combined exhaust-gas aftertreatment system for the aftertreatment of the exhaust gas in the at least one exhaust line, with the combined exhaust-gas aftertreatment system comprising
■ a storage catalytic converter (LNT) for storing and reducing the nitrogen oxides (NOₓ) contained in the exhaust gas,
■ a particle filter for collecting and burning the soot particles contained in the exhaust gas, which particle filter is integrally formed together with the storage catalytic converter as a structural unit, and
■ an oxidation catalytic converter which is arranged upstream of the storage catalytic converter and the particle filter and which serves in particular for the oxidation of the carbon monoxide (CO) and unburned hydrocarbons (HC) contained in the exhaust gas,
**characterized in that**
■ the oxidation catalytic converter of the combined exhaust-gas aftertreatment system is heated to a predefinable temperature T_{threshold, cat} if the present temperature T_{catalyst} of the oxidation catalytic converter is lower than the predefined temperature T_{threshold, cat}, that is to say T_{catalyst} < T_{threshold, cat}, and
■ the storage catalytic converter is heated to a predefinable temperature T_{threshold, LNT} if the present temperature T_{LNT} of the storage catalytic converter is lower than the predefined temperature T_{hreshold, LNT}, that is to say T_{LNT} < T_{threshold, LNT}, and subsequently
■ a mathematical simulation is carried out which - assuming that the exhaust gas is enriched for a predefinable time period Δtᵢ with reducing agents for reducing the nitrogen oxides - predetermines the temperature T_{DPF} (t₁) in the particle filter at a predefinable time t₁.

2. Method according to Claim 1, **characterized in that**, for the purpose of filter regeneration, the exhaust gas is actually enriched for the predefined time period Δtᵢ with reducing agents if the predetermined temperature T_{DPF} (t₁) in the particle filter is higher than a predefinable limit temperature T_{Grenz}, that is to say if: T_{DPF} (t₁) > T_{Grenz}.

3. Method according to Claim 1 or 2, **characterized in that**, by means of a mathematical simulation, the amount of soot oxidized in the particle filter Δm_{soot, rech} or the remaining loading ϕ_{DPF, rech} of the particle filter is predetermined for the situation that the exhaust gas is enriched for the predefined time period Δtᵢ with reducing agents.

4. Method according to Claim 3, **characterized in that** the predetermined amount Δm_{soot, rech} of soot is compared with a predefinable amount Δm_{soot, threshold} and/or the predetermined loading ϕ_{DPF, rech} of the particle filter is compared with a predefinable loading ϕ_{DPF, threshold} of the particle filter and
■ the mathematical simulation is carried out again with an increased time period Δtᵢ₊₁ > tᵢ, and/or
■ the oxidation catalytic converter and/or the storage catalytic converter is heated further,
if : Δm_{soot, rech} < Δm_{soot, threshold} and/Or ϕ_{DPF, rech} > ϕ_{DPF, threshold}.

5. Method according to Claim 3, **characterized in that** the predetermined amount Δm_{soot, rech} of soot is compared with a predefinable amount Δm_{soot, threshold} and/or the predetermined loading Δ_{DPF, rech} of the particle filter is compared with a predefinable loading ϕ_{DPF, threshoid} of the particle filter, and the exhaust gas is actually enriched for the predefined time period Δtᵢ with reducing agents if: Δm_{soot, rech} > Δmₛₒₒₜ, threshold and/or ϕ_{DPF, rech} < ϕ_{DPF, threshold}.

6. Method according to one of the preceding claims, **characterized in that** the amount Δm_{NOX, rech} of nitrogen oxides (NOₓ) converted in the storage catalytic converter during the time period Δtᵢ, and/or the degree of saturation ϕ_{LNT, rech} of the storage catalytic converter after the expiry of the time period Δtᵢ, is predetermined.

7. Method according to Claim 6, **characterized in that** the predetermined amount Δm_{NOx, rech} of nitrogen oxides is compared with a predefinable amount Δm_{NOx, threshold} and/or the predetermined degree of saturation ϕ_{LNT, rech} is compared with a predefined degree of saturation ϕ_{LNT, threshold}, and
■ the mathematical simulation is carried out again with an increased time period Δtᵢ₊₁ > Δtᵢ, and/or
■ the oxidation catalytic converter and/or the storage catalytic converter is heated further,
if: Δm_{NOx, rech} < Δm_{NOx, threshold} and/or ϕ_{LNT, rech} > ϕ_{LNT, threshold}.

8. Method according to Claim 6, **characterized in that** the predetermined amount Δm_{NOx, rech} of nitrogen oxides is compared with a predefinable amount Δm_{NOx, threshold} and/or the predetermined degree of saturation ϕ_{LNT,rech} is compared with a predefined degree of saturation ϕ_{LNT, threshold} and the exhaust gas is actually enriched for the predefined time period Δtᵢ with reducing agents for reducing the nitrogen oxides if: Δm_{NOx, rech} > Δm_{NOx, threshold} and/or ϕ_{LNT, rech} < ϕ_{LNT, threshold}.

9. Method according to one of the preceding claims, **characterized in that**, as a time t₁, a time is predefined which lies 20 to 200 seconds after the end of the simulated enrichment of the exhaust gas with reducing agents.

10. Method according to one of the preceding claims, **characterized in that**, at the start of the simulation, it is assumed that the internal combustion engine continues to be operated in the same way as before.

11. Method according to one of Claims 1 to 9, **characterized in that** the time period Δtᵢ is adapted to a changed operating mode of the internal combustion engine.

12. Method according to one of the preceding claims, **characterized in that**
■ the heating of the oxidation catalytic converter is ended when the temperature T_{LNT} of the storage catalytic converter exceeds a predefinable upper threshold temperature T_{upthreshold, LNT}, that is to say if T_{LNT} > T_{upthreshold, LNT}·

13. Method according to Claim 12, **characterized in that**
■ subsequently to the setting of the heating of the oxidation catalytic converter and for the purpose of the purification of the storage catalytic converter, the exhaust gas is actually enriched for the predefined time period Δtᵢ with reducing agents.

14. Method according to Claim 1, **characterized in that** the exhaust gas is actually enriched for the predefined time period Δtᵢ with reducing agents if the predetermined temperature T_{DPF} (t₁) in the particle filter is lower than a predefinable limit temperature T_{Grenz}, that is to say if: T_{DPF} (t₁) < T_{Grenz}.

15. Method according to Claim 14, **characterized in that**, for the purpose of heating the particle filter, the oxidation catalytic converter of the combined exhaust-gas aftertreatment system is heated.

## Revendications

1. Procédé de commande d'un post-traitement de gaz d'échappement et de calcul d'une future température T_{DPF}(t₁) dans un filtre à particules d'un moteur à combustion interne, qui comporte au moins un cylindre et au moins une conduite de gaz d'échappement pour l'évacuation des gaz d'échappement hors dudit au moins un cylindre et dans lequel il est prévu un système combiné de post-traitement de gaz d'échappement en vue du post-traitement des gaz d'échappement dans ladite au moins une conduite de gaz d'échappement, dans lequel le système combiné de post-traitement de gaz d'échappement comprend
• un catalyseur à accumulation (LNT) pour accumuler et réduire les oxydes d'azote (NOₓ) présents dans les gaz d'échappement,
• un filtre à particules pour collecter et brûler les particules de suie présentes dans les gaz d'échappement, qui est réalisé sous la forme d'une unité structurelle intégrale avec le catalyseur à accumulation, et
• un catalyseur d'oxydation disposé en amont du catalyseur à accumulation et du filtre à particules, en particulier pour l'oxydation du monoxyde de carbone (CO) présent dans les gaz d'échappement et des hydrocarbures imbrûlés (HC),
**caractérisé en ce que**
• on chauffe le catalyseur d'oxydation du système combiné de post-traitement de gaz d'échappement à une température prédéterminable T_{seuil, cat}, dans le cas où la température instantanée T_{catalyseur} du catalyseur d'oxydation est inférieure à la température prédéterminée T_{seuil,cat}, c'est-à-dire lorsque T_{catalyseur} < T_{seuil, cat}, et
• on chauffe le catalyseur à accumulation à une température prédéterminable T_{seuil, LNT}, dans le cas où la température instantanée T_{LNT} du catalyseur à accumulation est inférieure à la température prédéterminée T_{seuil, LNT}, c'est-à-dire lorsque T_{LNT} < T_{seuil, LNT}, et ensuite
• on effectue une simulation numérique, qui - partant du fait que les gaz d'échappement sont enrichis, pendant un laps de temps prédéterminable Δtᵢ, avec des agents de réduction pour réduire les oxydes d'azote - calcule la température T_{DPF} (t₁) dans le filtre à particules à un instant prédéterminable t₁.

2. Procédé selon la revendication 1, **caractérisé en ce que**, en vue de la régénération du filtre, on enrichit les gaz d'échappement effectivement pendant le laps de temps prédéterminé Δtᵢ avec des agents de réduction, dans le cas où la température calculée T_{DPF} (t₁) dans le filtre à particules est supérieure à une température limite prédéterminable Tₗᵢₘᵢₜₑ, c'est-à-dire lorsque T_{DPF} (t₁) > Tₗᵢₘᵢₜₑ.

3. Procédé selon la revendication 1 ou 2, **caractérisé en ce que** l'on calcule, au moyen d'une simulation numérique, la quantité de suie oxydée dans le filtre à particules Dm_{suie, calcul} ou la charge résiduelle ϕ_{DPF, calcul} du filtre à particules, pour le cas où les gaz d'échappement sont enrichis avec des agents de réduction pendant le laps de temps prédéterminé Δtᵢ.

4. Procédé selon la revendication 3, **caractérisé en ce que** l'on compare la quantité calculée Δm_{suie, calcul} de suie avec une quantité prédéterminable Δm_{suie, seuil} ou la charge calculée ϕ_{DPF, calcul} du filtre à particules avec une charge prédéterminable ϕ_{DPF, seuil} du filtre à particules, et
• on effectue de nouveau la simulation numérique avec un laps de temps accru Δtᵢ₊₁ > Δtᵢ, et/ou
• on chauffe davantage le catalyseur d'oxydation et/ou le catalyseur à accumulation,
dans le cas où l'on a:
Δm_{suie,calcul} < Δm_{suie,seuil} ou ϕ_{DPF,calcul} > ϕ_{DPF,seuiL}.

5. Procédé selon la revendication 3, **caractérisé en ce que** l'on compare la quantité calculée ΔM_{suie,calcul} de suie avec une quantité prédéterminable Δm_{suie,seuil} ou la charge calculée ϕ_{DPF,calcul} du filtre à particules avec une charge prédéterminable ϕ_{DPF,seuil} du filtre à particules, et on enrichit les gaz d'échappement effectivement pendant le laps de temps prédéterminé Δtᵢ avec des agents de réduction, dans le cas où l'on a:
Δm_{suie,calcul} > Δm_{suie,seuil} OU ϕ_{DPF,calcul} < ϕ_{DPF,seuil}.

6. Procédé selon l'une quelconque des revendications précédentes, **caractérisé en ce que** l'on calcule la quantité Δm_{NOx,calcul} d'oxydes d'azote (NOₓ), qui est convertie dans le catalyseur à accumulation pendant le laps de temps Δtᵢ, ou le degré de saturation ϕ_{LNT,calcul} du catalyseur à accumulation après l'expiration du laps de temps Δtᵢ.

7. Procédé selon la revendication 6, **caractérisé en ce que** l'on compare la quantité calculée Δm_{NOx, calcul} d'oxydes d'azote avec une quantité prédéterminable Δm_{NOx,seuil} ou le degré de saturation calculé ϕ_{LNT, calcul} avec un degré de saturation prédéterminable ϕ_{LNT,seuil}, et
• on effectue de nouveau la simulation numérique avec un laps de temps accru Δtᵢ₊₁ > Δtᵢ, et/ou
• on chauffe davantage le catalyseur d'oxydation et/ou le catalyseur à accumulation,
dans le cas où l'on a:
Δm_{NOx,calcul} < Δm_{NOx,seuil} ou ϕ_{LNT,calcul} > ϕ_{LNT,seuil}.

8. Procédé selon la revendication 6, **caractérisé en ce que** l'on compare la quantité calculée Δm_{NOx, calcul} d'oxydes d'azote avec une quantité prédéterminable Δm_{NOx, seuil} ou le degré de saturation calculé ϕ_{LNT, calcul} avec un degré de saturation prédéterminable ϕ_{LNT, seuil}, et on enrichit les gaz d'échappement effectivement pendant le laps de temps prédéterminé Δtᵢ avec des agents de réduction, dans le cas où l'on a:
Δm_{NOx, calcul} > Δm_{NOx, seuil} ou ϕ_{LNT, calcul} < ϕ_{LNT, seuil}.

9. Procédé selon l'une quelconque des revendications précédentes, **caractérisé en ce que** l'on prédétermine comme instant t₁ un instant qui est situé 20 à 200 secondes après la fin de l'enrichissement simulé des gaz d'échappement avec des agents de réduction.

10. Procédé selon l'une quelconque des revendications précédentes, **caractérisé en ce que** l'on considère, au moment du démarrage de la simulation, que le moteur à combustion interne continue à fonctionner de la même manière qu'auparavant.

11. Procédé selon l'une quelconque des revendications 1 à 9, **caractérisé en ce que** l'on adapte le laps de temps Δtᵢ à un fonctionnement modifié du moteur à combustion interne.

12. Procédé selon l'une quelconque des revendications précédentes, **caractérisé en ce que**
• on règle le chauffage du catalyseur d'oxydation, dès que la température T_{LNT} du catalyseur à accumulation dépasse un seuil de température supérieur prédéterminable T_{seuilsup, LNT}, c'est-à-dire dans le cas où l'on a: T_{LNT} > T_{seuilsup, LNT}.

13. Procédé selon la revendication 12, **caractérisé en ce que**
• à la suite du réglage du chauffage du catalyseur d'oxydation et dans le but de nettoyer le catalyseur à accumulation, on enrichit les gaz d'échappement effectivement pendant le laps de temps prédéterminé Δtᵢ avec des agents de réduction.

14. Procédé selon la revendication 1, **caractérisé en ce que** l'on enrichit les gaz d'échappement effectivement pendant le laps de temps prédéterminé Δtᵢ avec des agents de réduction, dans le cas où la température calculée T_{DPF}(t₁) dans le filtre à particules est inférieure à une température limite prédéterminable Tₗᵢₘᵢₜₑ, c'est-à-dire dans le cas où l'on a:
T_{DPF} (t₁) < Tₗᵢₘᵢₜₑ.

15. Procédé selon la revendication 14, **caractérisé en ce que** l'on chauffe le catalyseur d'oxydation du système combiné de post-traitement de gaz d'échappement dans le but de chauffer le filtre à particules.
